(19) Europäisches Patentamt
European Patent Office
Office européen des brevets

(11) EP 2 386 949 B1

(12) **EUROPÄISCHE PATENTSCHRIFT**

(45) Veröffentlichungstag und Bekanntmachung des Hinweises auf die Patenterteilung:
**30.04.2014 Patentblatt 2014/18**

(51) Int Cl.:
***G06F 9/50*** *(2006.01)*

(21) Anmeldenummer: **11165538.7**

(22) Anmeldetag: **10.05.2011**

(54) **Verfahren und Vorrichtung zum zuweisen einer Mehrzahl von Teilaufgaben einer Aufgabe zu einer Mehrzahl von Recheneinheiten einer vorgegebenen Prozessorarchitektur**

Method and device for allocating a number of sub-tasks from a task to a number of computing units in a pre-defined processor architecture

Procédé et dispositif d'attribution d'une multitude de tâches partielles d'une tâche à une multitude d'ordinateurs d'une architecture de processeur prédéterminée

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.05.2010 DE 102010028896**

(43) Veröffentlichungstag der Anmeldung:
**16.11.2011 Patentblatt 2011/46**

(73) Patentinhaber: **Fraunhofer-Gesellschaft zur Förderung der angewandten Forschung e.V.**
**80686 München (DE)**

(72) Erfinder:
- **Barkowski, Donald**
  **66892, Bruchmühlbach (DE)**
- **Kuhn, Thomas**
  **67657, Kaiserslautern (DE)**
- **Trapp, Mario**
  **67705, Trippstadt (DE)**

(74) Vertreter: **Hersina, Günter et al**
**Schoppe, Zimmermann, Stoeckeler & Zinkler**
**Postfach 246**
**82043 Pullach (DE)**

(56) Entgegenhaltungen:
**FR-A1- 2 791 789**

- **LUCKE L E ET AL: "Generalized ILP scheduling and allocation for high-level DSP synthesis", CUSTOM INTEGRATED CIRCUITS CONFERENCE, 1993., PROCEEDINGS OF THE IEEE 1993 SAN DIEGO, CA, USA 9-12 MAY 1993, NEW YORK, NY, USA,IEEE, 9. Mai 1993 (1993-05-09), Seiten 5.4.1-5.4.4, XP010222066, DOI: 10.1109/CICC.1993.590480 ISBN: 978-0-7803-0826-8**
- **YUMIN ZHANG ET AL: "Task Scheduling and Voltage Selection for Energy Minimization", DAC 2002, 14. Juni 2002 (2002-06-14), Seiten 183-188, XP55008561, New Orleans**
- **Martino Ruggiero: "TECNICHE PER IL CONTROLLO DINAMICO DEL CONSUMO DI POTENZA PER PIATTAFORME SYSTEM-ON-CHIP" In: "TECNICHE PER IL CONTROLLO DINAMICO DEL CONSUMO DI POTENZA PER PIATTAFORME SYSTEM-ON-CHIP", 1. März 2008 (2008-03-01), Bologna, XP55008556, Seiten i-xii, 1--237, * Seite 59 - Seite 76 ***

EP 2 386 949 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Ausführungsbeispiele gemäß der Erfindung beziehen sich auf die Ausführung von Programmen auf Prozessoren mit mehreren Prozessorkernen und insbesondere auf ein Verfahren und eine Vorrichtung zum Zuweisen einer Mehrzahl von Teilaufgaben einer Aufgabe zu einer Mehrzahl von Recheneinheiten einer vorgegebenen Prozessorarchitektur.

Heutzutage nutzen beispielsweise eingebettete Softwaresysteme immer komplexere Algorithmen, um neue Funktionen zu realisieren. Daher ist es notwendig, dass Hardwareplattformen, insbesondere Prozessoren, immer leistungsfähiger werden. Diese notwendige Leistungssteigerung wurde, analog zur Welt der Personal-Computer, in der Regel durch eine Erhöhung der Taktfrequenz erreicht. Mittlerweile ist diese Entwicklung aber an einem Punkt angekommen, an dem eine weitere Erhöhung der Taktfrequenz zu erheblichen Problemen mit der erhöhten Leistungsaufnahme sowie der Anfälligkeit für elektro-magnetische Störungen führt. Weitere Leistungssteigerungen lassen sich daher nur noch durch das Erhöhen der Anzahl der Prozessorkerne erreichen, unter der Vorraussetzung, dass die anstehenden Aufgaben effizient auf diesen parallelisiert werden können. Der Einsatz von diesen Mehrkernprozessoren ist bei Personal-Computern bereits seit längerem gang und gäbe, in der Welt der eingebetteten Systeme ist es ein beginnender Trend.

Mehrkernprozessoren im Bereich der eingebetteten Systeme bestehen aus homogenen- oder heterogenen Kernen. Im letzteren Fall sind die Kerne nicht gleichwertig - bestimmte Kerne unterstützen in diesem Fall spezielle Operationen oder haben (schnelleren) Zugriff auf bestimmte Geräte. Der Overhead, der durch die Kommunikation der Kerne untereinander auftritt, muss ebenfalls berücksichtigt werden. Akutelle Mehrkernprozessoren bestehen aus einer vergleichsweise geringen Anzahl an Kernen und nutzen daher einfache Kommunikationsansätze, beispielsweise eine speichergekoppelte Kommunikation. Zukünftige Plattformen mit vielen Kernen werden komplexere Kommunikationsformen benötigen, bei denen die Kommunikation zwischen den Recheneinheiten ebenfalls geplant werden muss.

Um das Potenzial dieser Mehrkernprozessoren ausschöpfen zu können, müssen die darauf ausgeführten Programme parallelisiert werden, um in kleinen Teilaufgaben nebenläufig auf verschiedenen Kernen abgearbeitet werden zu können. Konventionelle Betriebssysteme im PC-Bereich führen in der Regel eine Vielzahl von unabhängigen Arbeiten gleichzeitig aus; diese lassen sich naturgemäß leicht parallelisieren. Anwendungen aus dem Bereich der eingebetteten Systeme hingegen werden direkt für eine bestimmte Aufgabe und Hardware entwickelt, beispielsweise um die Stabilität eines Autos zu regeln. Diese Systeme benötigen neue Programmieransätze, welche die Aufgaben der Software effizient auf Recheneinheiten verteilen, um von modernen Mehrkernprozessoren zu profitieren.

In der Domäne der Eingebetteten Systeme stehen Mehrkernprozessoren erst am Beginn ihrer Verbreitung. Daher werden Softwaresysteme und/oder Modelle momentan manuell partitioniert. Moderne Modellierungswerkzeuge wie Simulink ("TheMathworks Simulink®, Release 2009a, http://www.mathworks.com/products/simulink/") und Lab View ("National Instruments LabView, Version 8.6, http://www.ni.com/labview/") bieten daher keine, oder nur eine rudimentäre Unterstützung für die Parallelisierung von Modellen. Die manuelle Partitionierung erfordert von den Entwicklern explizites Wissen um die Zielplattform, um beispielsweise spezielle Modellierungskonstrukte anzuwenden, die explizit Teile des Datenflussmodells für die parallele Ausführung markieren. Lediglich das Parallelisieren von Modellen auf SIMD-Architekturen (Prozessoren, die die gleiche Anweisung auf einer Vielzahl unterschiedlicher Daten ausführen, single-instruction-multiple-data-Architektur, einfäch-Befehl-mehrfach-Daten-Architektur), die jedoch nur einfache Datenparallelität, beispielsweise für die Bildverarbeitung, unterstützen, werden in ausreichendem Maße von Modellierungswerkzeugen unterstützt (z.B. "David R. Martinez, Robert A. Bond, M. Michael Vai, Bilge E. S. Akgul: High Performance Embedded Computing Handbook, pp. 509-515, CRC Press, 2008, ISBN 084937197X, 9780849371974", "National Instruments LabView, Version 8.6, http://www.ni.com/labview/"). Diese sind jedoch nur für sehr spezielle Anwendungsfälle geeignet.

Existierende Forschungsansätze, die das Problem der Partitionierung von Softwaremodellen lösen, basieren auf dem Partitionieren von Graphen. In der Regel werden Datenflussgraphen in mehrere voneinander unabhängige Partitionen zerlegt. Es gibt zahlreiche Veröffentlichungen, die Algorithmen beschreiben, die dieses Problem in der Theorie lösen. Jedoch werden hierbei immer Vereinfachungen angenommen, aufgrund derer diese Verfahren in der Realität nicht anwendbar sind. Im Folgenden werden einige relevante Arbeiten mit deren Vereinfachungen beschrieben.

Die Autoren von "Michael I. Gordon, William Thies and Saman Amarasinghe: Exploiting Coarse-Grained Task, Data, and Pipeline Parallelism in Stream Programs, 2006, ASPLOS' 06, 151-162" nutzen eine vereinfachte Modellierungssprache, welche keine Verzweigungen im Datenfluss erlaubt. Das bedeutet, dass ein Datenflussknoten nur maximal einen Folgeknoten haben kann. Das vorgestellte Verfahren "StreamIT", wurde für die Entwicklung von Bildfiltern konzipiert und ist daher von dieser Einschränkung nicht betroffen. Die praktische Anwendbarkeit der auf "StreamIT" aufbauenden Partitionierungstechniken in anderen Domänen ist jedoch stark eingeschränkt.

"Ruggiero, Martino; Guerri, Alessio; Bertozzi, Davide; Milano, Michaela; Benini, Luca: A Fast and Accurate Technique for Mapping Parallel Applications on Stream-Oriented MPSoC Platforms with Communication Awareness, International Journal of Parallel Programming, Vol. 36, No. 1, Feb 08" partitioniert Algorithmen die Datenströme verarbeiten auf verschiedene Prozessorkerne. Dabei modellieren die Autoren ein einfaches Kommunikationsnetz mit einem einfachen, additiven Kommunikationsmodell zwischen Prozessorkemen. Dies lässt keine realistischen Schlüsse auf die tatsächliche Kommunikationslast durch eine Partitionierung auf mehrere Kerne zu.

"Benini, Luca; Lombardi, Michele; Mantovani, Marco; Milano, Michaela and Ruggiero, Martino: Multi-stage Benders Decomposition for Optimizing Multicore Architectures, CPAIOR 2008, LNCS 5015, pp. 36-50, 2008" ignoriert die Kommunikation zwischen Kernen und fokussiert nur auf die benötigte Zeite für Berechnungen. Gerade eine sehr feingranulare Modellpartitionierung und -parallelisierung auf Architekturen mit sehr vielen Kernen kann jedoch signifikante Kommunikationslasten erzeugen, die hier nicht berücksichtigt werden.

"raw Architecture Workstation Project, http://groups.csail.mitedu/cag/raw(, last checked 28.05.2009", "Michael I. Gordon, William Thies and Saman Amarasinghe: Exploiting Coarse-Grained Task, Data, and Pipeline Parallelism in Stream Programs, 2006, ASPLOS' 06, 151-162" und "Robatmili, B.; Coons, K. E.; Burger, D. & McKinley, K. S. Strategies for Mapping Dataflow Blocks to Distributed Hardware 2008") beschreiben Forschungsprozessoren, bei denen das Kommunikationsnetzwerk durch Crossbars (Querverbindungen) realisiert wird. Diese sind in der Lage jede mögliche Verbindung zwischen zwei Kernen zu schalten. Da die Komplexität von Crossbars quadratisch mit der Anzahl der Kerne wächst, ist deren Anwendung auf Prozessoren mit wenigen Kernen beschränkt. Aufgrund der Länge der Leitungswege ist weiterhin die erreichbare Taktrate, und damit auch die Kommunikationsgeschwindigkeit stark eingeschränkt.

Andere Arbeiten, beispielsweise "Chatha, Karam: Hardware-Software Partitioning and Pipelined Scheduling of Transformative Applications, IEEE Transactions on very large scale integration (VLSI) Systems, Vol. 10, No. 3, June 2002"), unterstützen nur einfache speichergekoppelte Architekturen für die Modellpartitionierung, welche nicht auf eine größere Anzahl Kerne skalieren.

Des Weiteren sind bekannte Ansätze und Details zu Ansätzen in den Dokumenten "Brandenburg, B. B.; Calandrino, L. M. & Anderson, J. H.: On the Scalability of Real-Time Scheduling Algorithms on Multicore Platforms: A Cas Study, Real-Time Systems Symposium, 2008, 00, 157-169", "Liu, Y.: Zhang, X.: Li, H. &Qian, D. Allocating Tasks in Multi-core Processor based Parallel System IFIP International Conference on Network and Parallel Computing Workshops, 2007, 748-753", "Singler, Johannes; Kosnik, Baenjamin: The GNU libstd++parallel mode: Software Engineering Considerations"), ("Open MP.org, http://openmp.org/wp/, last checked 28.05.2009", "Kwok, Yu-Kwong; Ahmad, Ishfaq: Static Scheduling Algorithms for Allocating Directed Task Graphs to Multiprocessors, ACM Computing Surveys, Vol. 31, No. 4, December 1999" und "Morris, Robert; Nowrouzian, Behrouz: A Novel Technique for Pipelined Scheduling and Allocation of Data-Flow Graphs based on Genetic Algorithms, CCECE 1996, pp.429-432" zu finden.

Das Dokument von Lori E. Lucke und Keshab K. Parhi "Generalized ILP Scheduling and Allocation for High-Level DSP Synthesis" in Custom Integrated Circuit Conference, 1993, Proceedings of the IEEE 1993 San Diego, CA USA, 9-12 May 1993, New York, NY, USA, IEEE zeigt eine Verallgemeinerung der ganzzahligen linearen Programmierungs-Formulierung zur automatischen Anordnung eines Datenflussgraphen in Hinblick auf die Prozessornutzung. Das Dokument zeigt nicht, dass eine parametrisierte Beschreibung einer Mehrzahl von Teilaufgaben eine Mehrzahl von Datenverbindungen zwischen den Teilaufgaben definiert und die parametrisierte Beschreibung der vorgegebenen Prozessorarchitektur eine Mehrzahl von Datenverknüpfungen zwischen den Recheneinheiten definiert, und auch nicht, dass das lineare Gleichungssystem auf einer parametrisierten Kostenbeschreibung basiert, wobei die parametrisierte Kostenbeschreibung für jede Teilaufgabe und jede Datenverbindung zwischen Teilaufgaben angibt, wie viele Zeitintervalle jede Recheneinheit für eine Bearbeitung jeder Teilaufgabe benötigt und wie viele Zeitintervalle jede Datenverknüpfung zwischen den Recheneinheiten für eine Realisierung jeder Datenverbindung benötigt.

Zusammenfassend stellen wir fest, dass es bereits Arbeiten gibt, die das Partitionieren von Datenflussmodellen beschreiben. Diese verwenden allerdings teilweise stark vereinfachte Modellierungssprachen bzw. Plattformmodelle.

Eine zu weit reduzierte Modellierungssprache schränkt die Anzahl der modellierbaren Funktionalitäten zu sehr ein, um noch praxisrelevant sein zu können.

Gerade bei heterogenen eingebetteten Mehrkernsystemen spielen die Besonderheiten der einzelnen Kerne (beispielsweise der Befehlssatz, die verfügbare Menge an lokalem Speicher, Co-Prozessoren oder Durchgriff auf andere spezielle Hardware) sowie die Komplexität des zugrunde liegenden Kommunikationsnetzes eine entscheidende Rolle. Ein Plattformmodell, das zur Berechnung einer effizienten Parallelisierung auf einer solchen Plattform dienen soll, muss daher diese Besonderheiten mit ausreichender Genauigkeit wiedergeben können.

Momentane Arbeiten im Bereich eingebetteter Systeme zeigen, dass diese Komplexen Plattformen an Einfluss gewinnen werden. Beispielsweise besteht der Tile Gx Prozessor der Firma Tilera aus 100 Rechenkernen, welche in einem Gittermuster angeordnet sind. Kommunikationskosten steigen mit der Entfernung der kommunizierenden Kerne zueinander. Nur Kerne, die außen liegen haben über I/O-Schnittstellen Zugriff auf externe Geräte, dabei hat jeder dieser Kerne unterschiedliche Geräte, mit denen er kommuniziert.

Es ist die Aufgabe der vorliegenden Erfindung ein verbessertes Konzept zum Zuweisen einer Mehrzahl von Teilaufgaben einer Aufgabe zu einer Mehrzahl von Recheneinheiten einer vorgegebenen Prozessorarchitektur zu schaffen, die eine Behandlung von komplexen Prozessorarchitekturen und/oder Aufgaben, einer schnelleren Bearbeitung der Aufgabe durch die Prozessorarchitektur und/oder eine Reduktion des Aufwands ermöglicht.

Diese Aufgabe wird durch ein Verfahren gemäß Anspruch 1 oder eine Vorrichtung gemäß Anspruch 18 gelöst.

Ein Ausführungsbeispiel gemäß der Erfindung schafft ein Verfahren zum Zuweisen einer Mehrzahl von Teilaufgaben einer Aufgabe zu einer Mehrzahl von Recheneinheiten einer vorgegebenen Prozessorarchitektur. Das Verfahren umfasst ein Bereitstellen eines linearen Gleichungssystems und ein Bestimmen einer Zuweisung jeder Teilaufgabe der Mehrzahl von Teilaufgaben zu einer Recheneinheit der vorgegebenen Prozessorarchitektur. Das linear Gleichungssystem basiert auf einer parametrisierten Beschreibung der Mehrzahl von Teilaufgaben der Aufgabe, einer parametrisierten Beschreibung der vorgegebenen Prozessorarchitektur und einer Mehrzahl von Randbedingungen. Die Zuweisung jeder Teilaufgabe der Mehrzahl von Teilaufgaben zu einer Recheneinheit der vorgegebenen Prozessorarchitektur wird basierend auf dem linearen Gleichungssystem bestimmt, so dass alle Randbedingungen erfüllt sind.

Ausführungsbeispiele gemäß der Erfindung basieren auf dem Kerngedanken, dass das Problem der Zuweisung von Teilaufgaben auf eine Mehrzahl von Recheneinheiten, wodurch eine zumindest teilweise parallele Verarbeitung der Aufgabe ermöglicht wird, auf ein lineares Gleichungssystem abgebildet wird, dessen Lösung ein oder mehrere mögliche Zuweisungen der Teilaufgaben auf die Recheneinheiten ergibt (sofern das zu lösende Problem überhaupt eine Lösung).

Das lineare Gleichungssystem wird dabei aus einer parametrisierten Beschreibung der Mehrzahl von Teilaufgaben der Aufgabe, einer parametrisierten Beschreibung der vorgegebenen Prozessorarchitektur und einer Mehrzahl von Randbedingungen abgeleitet oder berechnet. Zur Beschreibung der Mehrzahl von Teilaufgaben der Aufgabe (die z.B. ein abzuarbeitendes Programm ist) und der Prozessorarchitektur können bekannte Hilfsmittel, wie z.B. Datenflussgraphen oder Strukturgraphen, herangezogen werden. Diese werden nach dem erfindungsgemäßen Konzept in ein lineares Gleichungssystem umgewandelt. Zur Lösung des linearen Gleichungssystems kann ein herkömmlicher Lösungsalgorithmus, wie z.B. ein linearer-Optimierungsalgorithmus-für-ganze-Zahlen (ILP-Algorithmus, integer linear programming algorithm), verwendet werden.

Dadurch wird es ermöglicht, auch für komplexe Systeme und/oder komplexe Aufgaben auf einfache Art und Weise (z.B. durch Erstellen eines Datenflussgraphen und eines Strukturgraphen) eine Lösung für eine effizientere, parallele Bearbeitung der Aufgabe zu finden.

Bei einigen Ausführungsbeispielen gemäß der Erfindung wird zum Lösen des linearen Gleichungssystems ein linearer-Optimierungsalgorithmus-für-ganze-Zahlen verwendet. Dazu kann das lineare Gleichungssystem beispielsweise durch eine Koeffizientenmatrix, einen Ergebnisvektor und einen Randbedingungsvektor repräsentiert werden.

Einige Ausführungsbeispiele gemäß der Erfindung beziehen sich auf das Bestimmen einer optimierten Zuweisung jeder Teilaufgabe zu einer Recheneinheit der vorgegebenen Prozessorarchitektur. Dazu kann eine Optimierungsbedingung definiert werden. Beispielsweise kann die Optimierungsbedingung die Bestimmung einer Zuweisung, die einen minimalen Energieverbrauch der Prozessorarchitektur oder eine minimale Latenz ergibt, sein.

Ausführungsbeispiele gemäß der Erfindung werden nachfolgend Bezug nehmend auf die beiliegenden Figuren näher erläutert. Es zeigen:

Fig. 1 ein Flussdiagramm eines Verfahrens zum Zuweisen einer Mehrzahl von Teilaufgaben einer Aufgabe zu einer Mehrzahl von Recheneinheiten einer vorgegebenen Prozessorarchitektur;

Fig. 2 ein Flussdiagramm eines Verfahrens zum Zuweisen einer Mehrzahl von Teilaufgaben einer Aufgabe zu einer Mehrzahl von Recheneinheiten einer vorgegebenen Prozessorarchitektur;

Fig. 3 einen Datenflussgraph;

Fig. 4 einen Strukturgraph;

Fig. 5 eine Zuordnung der Komponenten eines Datenflussgraphs auf Verknüpfungen und Recheneinheiten;

Fig. 6 einen möglichen Zeitplan für die Zuordnung aus Fig. 5;

Fig. 7 einen Zeitplan unter Ausnutzung von Software-Fließbandverarbeitung;

Fig. 8 eine Darstellung der Fließbandverarbeitungsunterstützung in der Ereignis-Notation;

Fig. 9 eine schematische Darstellung eines Beispiels eines linearen Gleichungssystems repräsentiert durch eine Koeffizientenmatrix, einen Ergebnisvektor und einen Randbedingungsvektor;

Fig. 10a einen Datenflussgraph eines ersten Anschauungsbeispiels;

Fig. 10b einen Strukturgraph des ersten Anschauungsbeispiels;

Fig. 10c ein Beispiel für einen Ergebnisvektor;

Fig. 11a einen Datenflussgraph eines zweiten Anschauungsbeispiels;

Fig. 11b einen Strukturgraph des zweiten Anschauungsbeispiels;

Fig. 11c ein Beispiel für einen Ergebnisvektor;

Fig. 12 einen Zeitplan des zweiten Anschauungsbeispiels; und

Fig. 13 ein Blockdiagramm einer Vorrichtung zum Zuweisen einer Mehrzahl von Teilaufgaben einer Aufgabe zu einer Mehrzahl von Recheneinheiten einer vorgegebenen Prozessorarchitektur.

Im Folgenden werden teilweise für Objekte und Funktionseinheiten, die gleiche oder ähnliche funktionelle Eigenschaften aufweisen, gleiche Bezugszeichen verwendet. Des Weiteren können optionale Merkmale der verschiedenen Ausführungsbeispiele miteinander kombinierbar oder zueinander austauschbar sein.

Fig. 1 zeigt ein Flussdiagramm eines Verfahrens 100 zum Zuweisen einer Mehrzahl von Teilaufgaben einer Aufgabe zu einer Mehrzahl von Recheneinheiten einer vorgegebenen Prozessorarchitektur entsprechend eines Ausführungsbeispiels gemäß der Erfindung. Das Verfahren 100 umfasst ein Bereitstellen 110 eines linearen Gleichungssystems und ein Bestimmen 120 einer Zuweisung jeder Teilaufgabe der Mehrzahl von Teilaufgaben zu einer Recheneinheit der vorgegebenen Prozessorarchitektur. Dabei basiert das lineare Gleichungssystem auf einer parametrisierten Beschreibung der Mehrzahl von Teilaufgaben der Aufgabe, einer parametrisierten Beschreibung der vorgegebenen Prozessorarchitektur und einer Mehrzahl von Randbedingungen. Die Zuweisung jeder Teilaufgabe zu einer Recheneinheit wird basierend auf dem linearen Gleichungssystem bestimmt, so dass alle Randbedingungen erfüllt sind.

Eine Aufgabe ist in diesem Zusammenhang beispielsweise ein Computerprogramm, dass von der Prozessorarchitektur abgearbeitet werden soll. Das Computerprogramm kann dazu in Teilprogramme unterteilt werden, die der Mehrzahl von Teilaufgaben entsprechen. Die Aufteilung in Teilaufgaben kann dabei automatisch (z.B. wenn das Computerprogramm bereits in Modulen vorliegt) oder manuell erfolgen.

Die parametrisierte Beschreibung der Mehrzahl von Teilaufgaben der Aufgabe definiert eine Aufteilung der Aufgabe und deren Datenverbindungen (zur Übermittlung von Ausgangsdaten einer Teilaufgabe als Eingangsdaten einer anderen Teilaufgabe) untereinander und kann beispielsweise durch einen Datenflussgraphen oder eine vergleichbare Darstellung erfolgen. Entsprechend definiert die parametrisierte Beschreibung der vorgegebenen Prozessorarchitektur die Mehrzahl von Recheneinheiten und deren Datenverknüpfungen (zur Übertragung von Daten zwischen den Recheneinheiten) untereinander und kann beispielsweise durch einen Strukturgraphen oder eine entsprechende andere Darstellung erfolgen. In beiden Fällen bezieht sich der Begriff parametrisierte Beschreibung auf eine Definition der Aufgabe sowie der Prozessorarchitektur durch Parameter, die nach festen Regeln bestimmt werden.

Im Folgenden werden die Teilaufgaben auch Jobs, die Datenverbindungen zwischen Teilaufgaben auch Connections, die Recheneinheiten auch Rechenknoten, Kerne, Prozessorkerne oder Cores und die Datenverknüpfungen zwischen Recheneinheiten auch Links genannt.

Die Randbedingungen definieren die Vorgaben, die die Zuweisung der Teilaufgaben auf die Recheneinheiten erfüllen muss. Dies können beispielsweise zwingende Randbedingungen sein, wie z.B. die Tatsache, dass zur gleichen Zeit dieselbe Recheneinheit nur eine Teilaufgabe bearbeiten kann, oder von der Anwendung geforderte Randbedingungen, wie z.B. eine maximale Bearbeitungszeit, sein.

Dementsprechend gibt es Randbedingungen, die sich aus der Beschreibung der Mehrzahl von Teilaufgaben der Aufgabe und/oder der Beschreibung der vorgegebenen Prozessorarchitektur ergeben und Randbedingungen, die durch die jeweilige Anwendung oder sonstige Vorgaben definiert sind.

Durch die Abbildung der Aufgabe und der Prozessorarchitektur unter Berücksichtung der Randbedingungen auf ein lineares Gleichungssystem können durch Lösen des linearen Gleichungssystems ein oder mehrere mögliche Zuweisungen jeder Teilaufgabe zu einer Recheneinheit der Prozessorarchitektur gefunden werden. Beispielsweise kann dadurch eine Partitionierung von Computerprogrammen für eine parallele Verarbeitung auf einer Prozessorarchitektur mit mehreren Recheneinheiten auf für sehr komplexe Systeme und/oder komplexe Programme erfolgen, da für die Lösung linearer Gleichungssysteme sehr effiziente Algorithmen zur Verfügung stehen. Dadurch kann im Vergleich mit bekannten Systemen auch eine wesentlich schnellere und/oder genauere Lösung gefunden werden.

Das lineare Gleichungssystem umfasst dabei beispielsweise für jede Randbedingung zumindest eine Gleichung.

In vielen Fällen ist nicht nur die einfache Zuweisung jeder Teilaufgabe zu einer Recheneinheit von Interesse, sondern auch das zeitliche Verhalten. Dies betrifft vielfältige Fragestellungen. Beispielsweise ist ein wichtiger Faktor, wie lange eine Verarbeitung von Eingabedaten dauert bis entsprechende Ausgabedaten (Bearbeitungsdauer der Aufgabe) bereitstehen, oder wie lange eine Recheneinheit durch eine Teilaufgabe belegt ist. Dazu kann ein betrachteter Zeitraum in vordefinierte Zeitintervalle unterteilt werden, für welche das zeitliche Verhalten der Zuweisung der Teilaufgaben zu den Recheneinheiten untersucht wird. In anderen Worten, die Bestimmung der Zuweisung jeder Teilaufgabe zu den Recheneinheiten kann zeitaufgelöst über vordefinierte Zeitintervalle eines betrachteten Zeitraums erfolgen. Der betrachtete Zeitraum kann beispielsweise einer maximalen Bearbeitungszeit, also jener Zeit, mit der sich Veränderungen der Eingabedaten in den Ausgabedaten niederschlagen sollen, entsprechen, kann aber auch länger oder kürzer sein.

Zusätzlich zu der parametrisierten Beschreibung der Mehrzahl von Teilaufgaben der Aufgabe, der parametrisierten Beschreibung der vorgegebenen Prozessorarchitektur und der Mehrzahl von Randbedingungen kann das lineare Gleichungssystem noch auf einer parametrisierten Kostenbeschreibung basieren. Diese Kostenbeschreibung definiert z.B. das zeitliche Verhalten der einzelnen Komponenten der Prozessorarchitektur in Bezug auf die Bearbeitung der Aufgabe. Beispielsweise kann die parametrisierte Kostenbeschreibung für jede Teilaufgabe und jede Datenverbindung zwischen Teilaufgaben angeben, wie viele Zeitintervalle jede Recheneinheit für eine Bearbeitung jeder Teilaufgabe benötigt und wie viele Zeitintervalle jede Datenverknüpfung zwischen den Recheneinheiten für eine Realisierung jeder Datenverbindung der Teilaufgaben benötigt. In anderen Worten, durch die parametrisierte Kostenbeschreibung kann definiert werden, wie lange eine Recheneinheit für die Bearbeitung einer Teilaufgabe brauchen würde, wenn diese der Recheneinheit zugewiesen wird, und wie lange eine Datenverknüpfung zur Weiterleitung von Daten zwischen zwei Teilaufgaben, also für die Realisierung der Datenverbindung, benötigt, wenn diese Datenverbindung der Datenverknüpfung zugewiesen werden würde.

Für die Lösung des linearen Gleichungssystems kann beispielsweise ein linearer Optimierungsalgorithmus für ganze Zahlen (ILP-Algorithmus, Integer Linear Programming Algorithm) verwendet werden. In anderen Worten, das Bestimmen der Zuweisung jeder Teilaufgabe kann durch das Lösen des linearen Gleichungssystems basierend auf einem linearen Optimierungsalgorithmus für ganze Zahlen erfolgen.

Dazu kann ein lineares Gleichungssystem bereitgestellt oder bestimmt werden, das als Koeffizienten ausschließlich ganzzahlige Werte aufweist. Dies stellt grundsätzlich keine Einschränkung dar, da der für die Berechnung trotz Quantisierung, beispielsweise durch eine beliebig feine Quantisierung der Zeitbasis, eine beliebige Genauigkeit erreicht werden kann.

Das lineare Gleichungssystem kann als fertiger Datensatz von einem Speichermedium (z.B. CD, DVD oder Festplatte) bereitgestellt werden oder basierend auf der parametrisierten Beschreibung der Mehrzahl von Teilaufgaben der Aufgabe, der parametrisierten Beschreibung der vorgegebenen Prozessorarchitektur und der Mehrzahl von Randbedingungen bestimmt werden. In anderen Worten, das Bereitstellen 110 des linearen Gleichungssystems kann ein Generierung des linearen Gleichungssystems basierend auf diesen Daten umfassen.

Des Weiteren kann das Verfahren einen Optimierungsschritt aufweisen, wenn mehr als eine mögliche Zuweisung jeder Teilaufgabe zu den Recheneinheiten möglich ist. Dazu kann eine Optimierungsbedingung festgelegt werden. In diesem Fall erfolgt nach dem Bestimmen der möglichen Zuweisungen jeder Teilaufgabe zu den Recheneinheiten ein Bestimmen einer optimierten Zuweisung jeder Teilaufgabe der Mehrzahl von Teilaufgaben zu einer Recheneinheit der vorgegebenen Prozessorarchitektur basierend auf der Optimierungsbedingung. Die Optimierungsbedingung kann beispielsweise ein minimaler Energieverbrauch der Prozessorarchitektur, ein minimaler Speicherbedarf oder eine minimale Latenz sein. In diesem Fall wird jene Zuweisung bestimmt, die den minimalen Energieverbrauch der Prozessorarchitektur oder die minimale Latenz ermöglicht.

Fig. 2 zeigt dazu ein Beispiel eines Flussdiagramms für ein Verfahren 200 zum Zuweisen einer Mehrzahl von Teilaufgaben einer Aufgabe zu einer Mehrzahl von Recheneinheiten einer vorgegebenen Prozessorarchitektur entsprechend eines Ausführungsbeispiels gemäß der Erfindung. Das Verfahren 200 umfasst ein Bestimmen 210 des linearen Gleichungssystems, ein Bestimmen 220 einer Zuweisung jeder Teilaufgabe der Mehrzahl von Teilaufgaben zu einer Recheneinheit der vorgegebenen Prozessorarchitektur und ein Bestimmen 230 einer optimierten Zuweisung jeder Teilaufgabe der Mehrzahl von Teilaufgaben zu einer Recheneinheit der vorgegebenen Prozessorarchitektur.

Wie oben beschrieben erfolgt das Bestimmen des linearen Gleichungssystems basierend auf einer parametrisierten Beschreibung der Mehrzahl von Teilaufgaben der Aufgabe, einer parametrisierten Beschreibung der vorgegebenen Prozessorarchitektur und einer Mehrzahl von Randbedingungen und das Bestimmen 230 der optimierten Zuweisung erfolgt basierend auf einer Optimierungsbedingung.

Das Bestimmen der optimierten Zuweisung jeder Teilaufgabe der Mehrzahl von Teilaufgaben zu einer Recheneinheit der vorgegebenen Prozessorarchitektur ist optional und kann genauso auch in dem in Fig. 1 gezeigten Verfahren angewandt werden.

Allgemein kann das lineare Gleichungssystem beispielsweise durch eine Koeffizientenmatrix A, einen Ergebnisvektor x und einen Randbedingungsvektor b repräsentiert werden, wobei der Ergebnisvektor x gesucht ist. Dies lässt sich beispielsweise auch folgendermaßen darstellen:

$$A \cdot x \leq b \text{ oder } A \cdot x \geq b$$

Wie man anhand der Formel erkennen kann, ist jeder Spalte der Koeffizientenmatrix A eine Variable des Ergebnisvektors x zugeordnet. Jede Zeile der Koeffizientenmatrix repräsentiert gemeinsam mit einem dazu gehörigen Parameter des Randbedingungsvektors b eine Randbedingung der Mehrzahl von Randbedingungen oder einen Teil einer Randbedingung der Mehrzahl von Randbedingungen, wenn die Randbedingung durch mehr als eine Zeile der Koeffizientenmatrix repräsentiert wird.

Die Anzahl der Variablen des Ergebnisvektors kann je nach Komplexität der Aufgabe und/oder der Prozessorarchitektur sehr groß werden. Beispielsweise kann der Ereignisvektor eine Variable für jede Kombination aus Teilaufgabe der Mehrzahl von Teilaufgaben und Recheneinheit der Mehrzahl von Recheneinheiten aufweisen. Bei der Bestimmung der Zuweisung wird dann für jede dieser Variablen ein Wert berechnet, der angibt, ob eine Teilaufgabe einer Recheneinheit zugewiesen ist. Die Werte können beispielsweise 0 oder 1 sein, je nachdem, ob eine Teilaufgabe dieser Recheneinheit zugewiesen ist oder nicht.

Ebenso kann der Ergebnisvektor Variablen enthalten, die den Datenverkehr zwischen Recheneinheiten festlegen. Dazu definiert beispielsweise die parametrisierte Beschreibung der Mehrzahl von Teilaufgaben eine Mehrzahl von Datenverbindungen (connections) zwischen den Teilaufgaben und die parametrisierte Beschreibung der vorgegebenen Prozessorarchitektur eine Mehrzahl von Datenverknüpfungen (links) zwischen den Recheneinheiten. Der Ergebnisvektor kann dann eine Variable für jede Kombination aus Datenverbindung zwischen den Teilaufgaben und Datenverknüpfung zwischen den Recheneinheiten aufweisen. Bei der Bestimmung der Zuweisung wird dann für jede dieser Variablen ein Wert berechnet, der angibt, ob eine Datenverbindung zwischen zwei Teilaufgaben einer Datenverknüpfung zwischen Recheneinheiten zugewiesen ist.

Beispielsweise wird dann das lineare Gleichungssystem Randbedingungen in Form von Zeilen aufweisen, die einer Zuweisung von zwei Teilaufgaben mit einer Datenverbindung (einer der beiden Teilaufgaben erhält Ausgangsdaten der anderen Teilaufgabe) auf zwei Recheneinheiten ohne Datenverknüpfung verhindern.

Da in vielen Fällen auch das zeitliche Verhalten der Zuweisung der Teilaufgaben auf die Recheneinheiten von Interesse ist, kann der Ergebnisvektor auch eine Variable für jede Kombination aus Teilaufgabe, Recheneinheit und Zeitintervall eines betrachteten Zeitraums sowie eine Variable für jede Kombination aus Datenverbindung zwischen den Teilaufgaben, Datenverknüpfung zwischen den Reicheneinheiten und Zeitintervall des betrachteten Zeitraums aufweisen. Wiederum wird dann während der Bestimmung der Zuweisung für jede dieser Variablen ein Wert berechnet, der angibt, in welchem Zeitintervall welche Teilaufgabe welcher Recheneinheit zugewiesen ist und welche Datenverbindung welcher Datenverknüpfung zu welchem Zeitintervall zugewiesen ist.

In diesem Fall kann beispielsweise durch entsprechende Randbedingungen sichergestellt werden, dass z.B. nur jeweils eine Teilaufgabe in einem Zeitintervall, also gleichzeitig, von einer Recheneinheit bearbeitet werden kann.

In vielen Anwendungen wird ein und dieselbe Aufgabe auch mehrmals hintereinander oder auch in permanenter Wiederholung ausgeführt. In solchen Fällen kann die Datenrate oft deutlich erhöht werden, wenn die wiederholte Bearbeitung der Aufgabe bereits beginnt bevor eine vorherige Bearbeitung der Aufgabe abgeschlossen ist. Dies wird auch Fließbandverarbeitung oder Pipelining genannt. Eine solche Fließverarbeitung kann bei der Bestimmung der Zuweisung berücksichtigt werden, um die Datenrate bei der wiederholten Bearbeitung der Aufgabe durch die vorgegebene Prozessorarchitektur zu optimieren.

In anderen Worten, das Bestimmen der Zuweisung jeder Teilaufgabe zu einer Recheneinheit kann unter Berücksichtigung einer wiederholten Bearbeitung der Aufgabe durch die vorgegebene Prozessorarchitektur erfolgen. Dabei ist eine zeitlich zuletzt zu bearbeitende Teilaufgabe der Aufgabe einer ersten Bearbeitung der Aufgabe später fertig bearbeitet als ein Beginn einer Bearbeitung einer zeitlich als erstes zu bearbeitenden Teilaufgabe der Aufgabe einer zweiten, späteren Bearbeitung der Aufgabe.

Im Folgenden wird das erfindungsgemäße Konzept anhand eines Beispiels für die Nutzung eines linearen Optimierungsalgorithmus für ganze Zahlen (ILP-Algorithmus) basierend auf einem Datenflussgraph und einem Strukturgraph sowie dazugehörige Randbedingungen näher erläutert. Das Beispiel stellt eine mögliche Partitionierung als ILP-Beschreibung dar.

Es beschreibt z.B. eine Herangehensweise zur Partitionierung einer durch einen synchronen Datenflussgraphen beschriebenen Software auf eine heterogene Multicore-Hardware (Mehrfachkern-Hardware). Dies bedeutet, dass ohne eine Veränderung der Ausführungssemantik der Datenflussgraph zerteilt und auf unterschiedliche Kerne der Zielplattform (Recheneinheit der Prozessorarchitektur) abgebildet wird. Durch die parallele Berechnung auf mehreren Kernen kann eine höhere Rechenleistung als bei der sequenziellen Ausführung auf einem einzelnen Kern erreicht werden.

Ein Aspekt des erfindungsgemäßen Kozepts zielt darauf ab, dieses Problem in ein ILP (lineares-Optimierungsproblem-für-ganze-Zahlen) überzuführen, damit es mit effizienten Solvern (Löser, ILP-Löser, ILP-Prozessor, ILP-Lösungsvorrichtung, ILP-Lösungsalgorithmus) gelöst werden kann. Er ist z.B. darauf optimiert, die in einem Datenflussgraphen vorhandene inhärente Parallelität auszunutzen. Dabei können bei räumlicher Parallelität parallele und nicht voneinander abhängige Datenpfade auf verschiedenen Kernen berechnet werden und bei zeitlicher Parallelität sequentielle Datenpfade in einzelne Stufen zerteilt und diese auf verschiedenen Kernen berechnet werden (->Software-Pipelining, Software-Fließbandverarbeitung).

Dabei kann sowohl berücksichtigt werden, dass die Prozessorkerne der Hardware unterschiedliche Architekturen haben und damit die Teilaufgaben unterschiedlich schnell berechnen können, als auch dass sie durch ein heterogenes Netzwerk miteinander verbunden sind.

Die Software kann durch einen Datenflussgraphen (DFG) 300 repräsentiert werden, dessen strukturelle Elemente z.B. in Fig. 3 dargestellt sind. Die Elemente sind Jobs j 1,j2,j3,j4 und Datenverbindungen c1,c2,c3,c4 (connections).

Ein Job (Teilaufgabe) repräsentiert eine rechnende Einheit mit Ein- und Ausgängen für ihre Arbeitsdaten. Sie kann erst dann aktiv werden (mit der eigentlichen Berechnung beginnen), wenn an all ihren Eingängen Datenworte (->Token) vorhanden sind. Durch die Berechnung werden die Token an allen Eingängen verbraucht, und an den Ausgängen neue Token erzeugt. Wird ein Job auf einem Kern ausgeführt, so belegt er diesen für eine bekannte, endliche und von der Architektur des Kerns abhängige Zeitspanne (WCET, worst case execution time, maximale Ausführungszeit) oder kürzer. Ist die Berechnung eines Jobs abgeschlossen, erzeugt dieser z.B. auf all seinen ausgehenden Kanten exakt ein Datenwort. Der Typ des Datenwortes kann für jeden Ausgang des Jobs festgelegt werden.

Eine Connection repräsentiert z.B. eine unidirektionale 1:1-Datenverbindung zwischen zwei Jobs. Über sie werden Datenworte vom Ausgang eines Jobs an den Eingang eines anderen Jobs weitergeleitet. Damit transportiert eine Connection beispielsweise immer Datenwörter eines einzigen, durch diesen Ausgang festgelegten Typs. Der Typ des Datenwortes ist nicht auf primitive Typen beschränkt. Semantisch kann eine Connection gleichbedeutend mit einer FIFO (first in first out memory, erster rein erster raus-Speicher) der Länge 1 angesehen werden. Eventuell noch vorhandene, ältere Token können beispielsweise ohne Rückfrage überschrieben werden.

In Fig. 3 hat beispielsweise Job 3 Datenabhängigkeiten von den beiden Jobs 1 und 2, was durch die beiden Kanten c1 und c3 dargestellt wird.

Der DFG führt z.B. in einem reaktiven System eine Berechnung aus, macht also eine Transformation von Eingabedaten aus der Umgebung in Ausgabedaten. Abweichend von der intuitiven Semantik als kontinuierliche Transformation auf einem Datenstrom kann die Berechnung in der Praxis beispielsweise immer nur auf zeitdiskreten Schnappschüssen des Datenstroms stattfinden. Der Datenaustausch mit der Umgebung wird über dedizierte Jobs erledigt, damit das Modell nicht um Kanten von und zur Umgebung erweitert werden muss.

Die Eingabedaten werden z.B. in speziellen Jobs (->Inport-Jobs, Eingangsjobs), die keine Eingänge und somit keine Abhängigkeiten von anderen Jobs haben, in den DFG eingespeist. Diese Inport-Jobs machen nichts weiter, als aus dem Eingabedatum ein Token für den DFG zu erzeugen. Da die Inport-Jobs keine eingehende Connections haben, sind sie theoretisch immer rechenbereit. Ihre Semantik ist z.B., dass sie sobald sie ausgeführt werden die aktuellste Eingabe aus der Umgebung an den DFG weiterreichen.

Die Ausgabedaten verlassen den DFG in speziellen Jobs(->Outport-Jobs, Ausgangsjobs), die keine Ausgänge besitzen und somit kein anderer Job von diesen abhängig ist. Diese Outport-Jobs machen nichts weiter, als bei Ausführung Daten an die Umgebung weiterzureichen.

Zyklische Strukturen können zu einem Deadlock (Verklemmung) führen, weswegen zyklische DFGs als Eingabe für diesen Algorithmus beispielsweise nicht zulässig sind. (In der Praxis kann diese Einschränkung beispielsweise durch eine hierarchische Darstellung des DFG umgangen werden. Zyklische Strukturen werden in einem Teilgraphen gekapselt und in einer niedrigeren Hierarchieebene verborgen.)

In vielen Fällen ist die Ausführung des DFG synchron, d.h. sie ist in diskrete Zyklen unterteilt, in denen jeder Job genau einmal ausgeführt wird (mono-rate DFG). Da sich die Datenabhängigkeiten der einzelnen Jobs voneinander zur Laufzeit nicht ändern und der Graph azyklisch ist, lässt sich immer ein sequenzieller statischer Schedule (Zeitplan) zur Ausführung des DFG finden, bei dem die Jobs in der Reihenfolge ihrer Datenabhängigkeiten zum jeweils frühestmöglichen Zeitpunkt ausgeführt werden. Für das Beispiel in Fig. 3 wäre eine gültige Ausführungsreihenfolge beispielsweise $j_1$, $j_2$ $j_3$, $j_4$.

Das zeitliche Verhalten des DFG wird z.B. durch den Durchsatz und die Latenz beschrieben. Für den Durchsatz gilt, das neue Eingabedaten periodisch in den DFG eingespeist werden. Die Datenraten können verschieden sein, solang das minimale Intervall $t_{period}$ bekannt ist und wenn ein Inport-Job aufgerufen wird, ohne dass neue Eingabedaten von der Umgebung vorliegen, erzeugt er auf jeder seiner ausgehenden Connection eine Kopie des Tokens, das er bei seinem letzten Aufruf ausgegeben hatte.

Die Implementierung des DFG muss imstande sein, die Eingabedaten komplett zu verarbeiten und keine Daten zu verwerfen.

Die maximale Latenz, mit der sich Veränderungen der Eingabedaten in den Ausgabedaten niederschlagen muss, ist bekannt. Sie kann für jedes Ausgabedatum verschieden sein, muss aber über die Zeit konstant sein.

Die Semantik eines DFG kann z.B. an die Semantik von Simulink® angelehnt sein, kann aber auch auf andere Datenflussmodelle abgebildet werden.

Das Netzwerklayout der Hardware kann, wie z.B. in Fig. 4 gezeigt, durch einen Strukturgraphen 400 repräsentiert werden. Die Strukturelemente sind Cores c1,c2,c3,c4 (Recheneinheiten) und Links 11,12,13,14,15 (Datenverknüpfung).

Als Core (Recheneinheit) wird ein Rechenknoten des Multicore-SoC (Mehrfachkern-System-auf-Chip, Prozessorarchitektur) bezeichnet. Jeder Knoten kann Jobs ausrühren, seine architekturellen Besonderheiten werden indirekt dadurch ausgedrückt, dass er jedem Job eine bestimmte worst-case Rechendauer (maximale Rechendauer) zuordnet. So könnte beispielsweise ein DSP (digitaler Signalprozessor) für die Jobs, für deren Berechnungen er ausgelegt ist, eine im Verhältnis zu allen anderen Cores extrem niedrige Laufzeit zugewiesen bekommen.

Als Link (Datenverknüpfung) wird ein (physikalischer) bidirektionaler Kommunikationskanal zwischen zwei oder mehr Cores bezeichnet. In Fig. 4 sind die Links 11, 12, 13 und 14 1: 1 -Verbindungen, während 15 einen Bus mit Zugang von allen 4 Cores repräsentiert. Für jede Connection (Datenverbindung) ist angegeben, wie lange ein Datentransport des Tokens dieser Connection auf dem Link dauert. Auch bei einem Bus gilt z.B., dass dieser vollständig blockiert ist, während ein Token auf diesem transportiert wird.

Die Lösung des Partitionings (Zuweisung der Teilaufgabe zu Recheneinheiten) kann zwei Teillösungen umfassen.

1. Die Zuweisung der Elemente des DFG zu Hardware-Resourcen.

2. Das Aufstellen eines statischen Schedules (Zeitplan), also Festlegung von periodisch wiederkehrenden Zeitscheiben, die Jobs bzw. Connections zugeordnet sind.

Diese beiden Teilprobleme sind eng ineinander verzahnt und können auch mit dem beschriebenen Algorithmus gemeinsam gelöst werden.

Damit der DFG ausgeführt werden kann, muss jeder Job auf einem Core, der dazu in der Lage ist, ausgeführt werden und der Datentransport von und zu dem Job möglich sein. Für jede Connection des DFG muss also z.B. gelten, dass entweder Start- und Zieljob auf dem selben Core sind, dann ist der Datentransport trivial z.B. über einen Speicherzugriff zu bewerkstelligen, oder Start- und Zieljob liegen auf verschiedenen Cores, aber zwischen diesen Cores existiert ein Link und dieser Link ist der Connection zugewiesen.

Ein Beispiel für eine gültige Zuweisung 500 findet sich in Fig. 5 Man beachte, dass der Connection $c_1$ kein Link zugewiesen ist, da ihr Quell- und Zieljob beide auf dem selben Core ausgeführt werden. Diese Zuweisung erlaubt implizit schon die parallele Ausführung der Jobsequenz $j_1$ und $j_2$ mit dem Job $j_3$, da zwischen diesen beiden keine Datenabhängigkeiten existieren.

Bei der komplett sequenziellen Ausführung auf nur einem Core ist die Lösung trivial, da dann alle Jobs auf diesen Core gemappt (abgebildet) werden und für keine Connection ein Link benötigt wird.

Ein (statischer) Schedule für die Ausführung des DFG legt die Ausführungszeiten von Jobs auf Cores und die Zeit für den Transport von Datenpaketen auf den Links fest. Er ist z.B. genau dann gültig, wenn gilt:

1. Jedem Job und jeder Connection wird ausreichend Zeit zugestanden. Dies bedeutet, dass jedem Job eine Zeitscheibe von mindestens der Länge, die die Ausführung auf den ihm zugewiesenen Core maximal dauert, gegeben wird. Für jede Connection, die einem Link zugewiesen ist, gilt dasselbe.

2. Kein Job wird ausgeführt, ohne rechenbereit zu sein. Für jede eingehende Connection gilt also, wenn sie einem Link zugeordnet ist, so endet ihr Zeitslot (Zeitscheibe) bevor der des Zieljobs beginnt, und wenn sie keinem Link zugeordnet ist, so endet der Zeitslot ihres Quelljobs bevor der des Zieljobs beginnt.

3. Jede Hardware-Resource kann zu einem Zeitpunkt nur einmal genutzt werden. Auf jedem Core bzw. jedem Link dürfen sich die Zeitslots nicht überlappen.

4. Die Ausführungsrate aller Jobs ist gleich. Dies entspricht der Anforderung an den DFG, dass er synchron ist. Ein Durchlauf des DFG beinhaltet, dass alle Jobs genau einmal ausgeführt werden, wenn beispielsweise ein Job zweimal ausgeführt würde, würde er unweigerlich Datenpakete auf seinen ausgehenden Connections überschreiben bevor diese von nachfolgenden Jobs genutzt werden können.

5. Die zeitlichen Anforderungen werden erfüllt. Die Latenz wird eingehalten, wenn für jeden Outport-Job gilt, dass sein Zeitslot vor der maximal zulässigen Latenz endet. Die Durchsatz-Anforderungen sind erfüllt, wenn die Latenz kleiner als das Daten-Intervall (maximale Bearbeitungszeit) ist.

Fig. 6 zeigt einen solchen gültigen Schedule 600 für das Beispiel aus Fig. 5. Man beachte hier, dass der Connection $c_1$ kein Zeitslot zugewiesen wurde, weil das zu ihr gehörige Datenpaket nicht über einen Link transportiert werden muss.

Betrachtet man sich Fig. 6 genauer, so fällt auf, dass alle Ressourcen über einen großen Teil der Laufzeit brachliegen, weswegen die Parallelisierung in dieser Form ineffizient ist. Durch Software-Pipelining (Software-Fließbandverarbeitung) sollen sequenzielle Aufgaben parallel auf verschiedenen Stationen abgearbeitet werden, um die Auslastung zu verbessern. Job $j_4$ wird nach den Jobs $j_1$, $j_2$ und $j_3$ ausgeführt, und während dessen Laufzeit könnten die übrigen Jobs schon wieder mit dem nächsten Datensatz den nächsten Ausführungszyklus des DFG beginnen.

Fig. 7 zeigt ein solches Ausführungsmodell 700. Der mit einem ' gekennzeichnete zweite Ausführungszyklus des DFG beginnt schon bevor der erste abgearbeitet ist. Die Taktrate der Pipeline ist gegeben durch den Abstand zwischen den beiden Ausführungszyklen des DFG, und bestimmt den Durchsatz. In diesem Fall ist dieser mit $t_{period}$ = 4 doppelt so groß wie in dem Beispiel aus Fig. 6. Der Job $j_4$ ist zwar im ersten Ausführungszyklus nach wie vor erst bei $t$ = 8 fertig, ab dann aber alle 4 Zeitschritte.

Da die Stufen der Pipeline (Fließbandverarbeitung) sich zeitlich überlappen, muss sichergestellt werden, dass sich die Zeitslots von Jobs oder Connections, die derselben Resource zugewiesen sind, sich auch nicht in verschiedenen Pipeline-Stufen überlappen. Beispielsweise können $j_2$ und $j_4$ nicht auf dem gleichen Core laufen, da ihre Ausführung sich in verschiedenen Pipeline-Stufen überlappt.

Durch das Software-Pipelining ändern sich die zuvor erwähnten Regeln noch folgendermaßen ab:

1. Jedem Job und jeder Connection wird ausreichend Zeit zugestanden.

2. Kein Job wird ausgeführt, ohne rechenbereit zu sein.

3. Jede Hardware-Resource (Hardware-Komponente) kann zu einem Zeitpunkt nur einmal genutzt werden. Auf jedem Core bzw. jedem Link dürfen sich die Zeitslots nicht überlappen. Auch dann nicht, wenn die Zeitslots um ein ganzzahliges Vielfaches der Pipeline-Periodendauer $t_{period}$ nach vom oder nach hinten verschoben werden.

4. Die Ausführungsrate aller Jobs ist gleich.

5. Die zeitlichen Anforderungen werden erfüllt. Die Durchsatz-Anforderungen sind erfüllt, wenn die Periodendauer der Pipeline kleiner oder gleich dem Daten-Intervall (maximale Bearbeitungszeit) ist.

In einem nicht-kontinuierliches Zeitmodell kann eine Quantelung der Zeit erfolgen. Der Zeitstrahl wird auf die Menge der reellen Zahlen $(\mathbb{R})$ abgebildet, somit ist theoretisch eine beliebig genaue zeitliche Auflösung möglich. In der Praxis kollidiert dies allerdings oft mit den Möglichkeiten einer effizienten algorithmischen Lösung, weswegen die Zeit in kleine diskrete Zeitscheiben aufgeteilt (gequantelt) werden kann.

Um eine benutzerdefinierte Quantelung der Zeit zu ermöglichen, kann die Zeit für alle Resourcen (Cores und Links) in diskrete, pro Resource jeweils gleich große Abschnitte (Zeitintervall) unterteilt werden. Der Beginn eines neuen Abschnitts wird durch das Auftreten eines Events (Ereignis), wie z.B. ein Taktsignal der Prozessorarchitektur, gekennzeichnet, sein Ende durch das Auftreten des Nachfolge-Events.

Für jeden Event kann eindeutig bestimmt werden, wann er beginnt, wie groß seine Dauer ist und welcher Resource (z.B. Recheneinheit oder Datenverknüpfung) er zugeordnet ist.

Statt einem Zeitslot wird ein Job oder eine Connection nun einer Menge von Events, auch Zeitintervall genannt, die alle zur selben Resource gehören, zugeordnet. Die gesamte Dauer all dieser Events muss ausreichen, den Job auf dieser Resource auszuführen bzw. die Daten dieser Connection zu übertragen.

Das Pipelining (Fließbandverarbeitung) kann durch die Events berücksichtigt werden. Die einzelnen Stufen der Pipeline sind mit $t_{period}$ getaktet, und in dem Beispiel 800 in Fig. 8 sind insgesamt 4 Pipeline-Stufen hintereinander, so dass die größte erlaubte Ende-zu-Ende-Latenz in einem DFG $t_{lat} = 4 * t_{period}$ ist. In der Figur sind zusätzlich alle Events ($e_1$..$e_{16}$) einer Resource ergänzt. Ob diese Resource ein Link oder ein Core ist, spielt an dieser Stelle keine Rolle.

Da jede Pipeline-Stufe alle $t_{period}$ von neuem mit der Ausführung beginnt, muss zum Schutz vor Überbelegung sichergestellt sein, dass sich die Events, deren Zeitscheiben sich in verschiedenen Pipeline-Stufen überlappen, innerhalb aller Pipeline-Takte nur höchstens einmal zugewiesen werden dürfen. So darf z.B. von den Events $e_1$, $e_5$, $e_9$ und $e_{13}$ nur maximal einer einem Job bzw. einer Connection zugewiesen werden.

Die Dauer der Events sollte so gewählt sein, dass die Zahl der Überlappungen von Zeitscheiben über verschiedene Pipeline-Stufen minimal ist. Dies kann erreicht werden, indem die Zeitscheiben der Events sich in $t_{period}$ periodisch wiederholen. Die Events unterschiedlicher Resourcen sind unabhängig voneinander, so dass die Zeitpunkte der Events von Resource zu Resource ohne Einschränkung variieren können. Das Überlappen von Events zu unterschiedlichen Pipeline-Stufen wird dadurch kenntlich gemacht, dass diese Events einer Event-Gruppe, auch Zeitintervall-Gruppe genannt, zugewiesen werden, wie etwa die beiden in Fig. 8 kenntlich gemachten Event-Gruppen.

Dem Nutzer kann dadurch die Möglichkeit zur Einflussnahme auf die Laufzeit (und auch indirekt auf die Ergebnisgüte) des ILP-Solvers (ILP-Prozessor, ILP- Lösungsalgorithmus) gegeben werden, denn die Granularität dieser Quantelung ist beliebig festlegbar. Je größer der Abstand zwischen den Events gewählt wird, desto größer wird der Verschnitt beim Ausführen der Resourcen aber desto kürzer wird der Solver laufen.

Eine zu grobgranulare Quantelung kann das Finden einer Lösung verhindern.

Im Folgenden wird ein Beispiel für eine mathematische Beschreibung des erfindungsgemäßen Konzepts dargestellt.

Die Eingabe der ILP-Formulierung kann durch globale Parameter definiert werden, die als konstante Größen schon von Vornherein bekannt sind.

Beispielsweise können als Parameter des DFG die Menge der Jobs $J$ die Menge der Connections $\chi$, Verlinkung (Verknüpfung) der Jobs über die Connections (Datenverbindung). Z.B. gibt:

source : $\chi \rightarrow J$ und target : $\chi \rightarrow J$
Quelle : $\chi \rightarrow J$ und Ziel : $\chi \rightarrow J$

den Quell- und Zieljob einer Connection an.

Jobs und Connections ergeben zusammengefasst die Aufgabe, die wenn sie einer Hardware-Resource zugeordnet ist, dort eine bestimmte Last verursachen.

Parameter der Multicore-Architektur können z.B. die Menge der Cores $C$, die Menge der Links $L$ sein und die Vernetzung der Architektur ist beispielsweise durch die folgenden Mengen bestimmt:

$$\underset{c \in \mathcal{C}}{\forall} : \mathcal{LtC}(c) = \{\text{Links, die mit c verbunden sind}\}$$

$$\underset{l \in \mathcal{L}}{\forall} : \mathcal{CtL}(l) = \{\text{Cores, die mit l verbunden sind}\}$$

Parameter des Zeitverhaltens können beispielsweise die Laufzeit eines Jobs auf einem Core:

$$d_{\text{run}} : \mathcal{J} \times \mathcal{C} \rightarrow \mathbb{R}$$

die Dauer der Kommunikation einer Connection auf einem Link:

$$d_{\text{com}} : \mathcal{X} \times \mathcal{L} \rightarrow \mathbb{R}$$

die maximale Periodendauer der Pipeline $t_{period}$ und die Deadline (Frist, max. Bearbeitungszeit) für einen Job sein:

$$t_{\text{dl}} : \mathcal{J} \rightarrow \mathbb{R}$$

Sie können nur für die Outport-Jobs spezifiziert werden. Behelfsmäßig können die Jobs ohne dedizierte Deadline mit einer unendlich großen Deadline spezifiziert werden. Daraus abgeleitet ergibt sich $t_{lat}$ als Maximum aller Deadlines.

Um eine benutzerdefinierte Quantelung der Zeit zu ermöglichen, wird die Zeit für alle Resourcen (Cores und Links) in diskrete, gleich große Abschnitte (Zeitintervalle) unterteilt. Der Beginn eines neuen Abschnitts wird durch das Auftreten eines Events gekennzeichnet. Jeder Event e ist fest einem Core ($e \in C\mathcal{E}$) oder einem Link $(e \in \mathcal{LE})$ zugeordnet, die Zugehörigkeit ist über binäre Entscheidungsfunktionen bestimmbar:

$$\text{is}_{\text{coreEvent}} : \mathcal{CE} \times \mathcal{C} \rightarrow \{0, 1\}$$

und

$$\mathrm{is}_{\mathrm{linkEvent}} : \mathcal{LE} \times \mathcal{L} \rightarrow \{0,1\}$$

Alle Events auf einem Core/Link haben die Dauer $d_{event}$. Die Startzeit eines Events ist $t_{start}$.

$$d_{\mathrm{event}} : \mathcal{CE} \cup \mathcal{LE} \rightarrow \mathbb{R}$$

$$t_{\mathrm{start}} : \mathcal{CE} \cup \mathcal{LE} \rightarrow \mathbb{R}$$

Events (Zeitintervalle), deren Zeitscheiben sich in verschiedenen Pipeline-Stufen überlappen, werden zu Event-Gruppen zusammengefasst.

$$\text{sei für } c \in \mathcal{C} : \quad \mathcal{CE}(c) = \{e \in \mathcal{CE}, \mathrm{is}_{\mathrm{coreEvent}}(e,c) = 1\}$$
$$\underset{c\in\mathcal{C}}{\forall}\ \underset{e_1,e_2\in\mathcal{CE}(c)}{\forall} : e_1 \,\mathrm{sameGroup}\, e_2 \equiv \underset{n\in\mathbb{Z}}{\exists} : [t_{\mathrm{event}}(e_1), t_{\mathrm{event}}(e_1) + d_{\mathrm{event}}(e_1)] \cap$$
$$[t_{\mathrm{event}}(e_2) + n * t_{\mathrm{period}}, t_{\mathrm{event}}(e_2) + d_{\mathrm{event}}(e_2) + n * t_{\mathrm{period}}] \neq \varnothing \quad (3.2.1)$$

Genau dasselbe gilt für alle Events, die Links zugeordnet sind.

Da die Zeitpunkte aller Events a priori bekannt sind, ist die Zusammensetzung dieser Gruppen nur von $t_{period}$ abhängig. Man kann vereinfachend davon ausgehen, dass $t_{period}$ eine konstante Größe ist, die als Eingabeparameter des ILP fungiert, und daher sind die Eventgruppen konstant. $t_{period}$ könnte aber alternativ auch erst bei der Bestimmung der Zuweisung bestimmt werden, um den Datendurchsatz zu optimieren. In diesem Beispiel seien im Folgenden als abgeleitete Parameter des ILP zusätzlich *CEG* und *LEG* definiert als die Mengen aller Eventgruppen:

$$\underset{eg\in\mathcal{CEG}}{\forall}\ \underset{e_1,e_2\in eg}{\forall} : e_1 \,\mathrm{sameGroup}\, e_2$$
$$\underset{eg\in\mathcal{LEG}}{\forall}\ \underset{e_1,e_2\in eg}{\forall} : e_1 \,\mathrm{sameGroup}\, e_2 \quad (3.2.2)$$

Damit charakterisieren alle Events, die zu einer Eventgruppe gehören, die Belegung einer Resource während einer Zeitscheibe relativ zum Beginn der Pipeline-Stufe. Diese Zeitscheibe kann beschrieben werden durch die beiden Größen $t_{group}$ (Beginn) und $d_{group}$ (Dauer). Sie werden bestimmt durch:

$$\underset{eg\in\mathcal{CEG}\cup\mathcal{LEG}}{\forall} : t_{\mathrm{group}}(eg) = \min_{e\in eg}\left(t_{\mathrm{event}}(e) - \left\lfloor\frac{t_{\mathrm{event}}(e)}{t_{\mathrm{period}}}\right\rfloor * t_{\mathrm{period}}\right)$$
$$d_{\mathrm{group}}(eg) = \max_{e\in eg}\left(t_{\mathrm{event}}(e) - \left\lfloor\frac{t_{\mathrm{event}}(e)}{t_{\mathrm{period}}}\right\rfloor * t_{\mathrm{period}} + d_{\mathrm{event}}(e)\right) - t_{\mathrm{group}}(eg) \quad (3.2.3)$$

Dies setzt voraus, dass Events nie den Zeitpunkt eines Vielfachen von $t_{period}$ überschneiden. Anders gesagt: Dass es auf keiner Resource vorkommt, dass nicht exakt zum Zeitpunkt eines Vielfachen von $t_{period}$ auch der Beginn eines Events ist.

Alternativ kann die Zugehörigkeit eines Events e zu einer Eventgruppe g folgendermaßen kontrolliert werden:

$$e \in g \equiv \underset{i \in \mathbb{N}}{\exists} : \Big( \big(t_{\text{group}}(g) + i \cdot t_{\text{period}} > t_{\text{event}}(e)\big) \wedge \big(t_{\text{group}}(g) + i \cdot t_{\text{period}} < t_{\text{event}}(e) + d_{\text{event}}(e)\big) \Big) \bigvee \Big( \big(t_{\text{group}}(g) + i \cdot t_{\text{period}} + d_{\text{group}}(g) > t_{\text{event}}(e)\big) \wedge \big(t_{\text{group}}(g) + i \cdot t_{\text{period}} + d_{\text{group}}(g) < t_{\text{event}}(e) + d_{\text{event}}(e)\big) \Big) \quad (3.2.4)$$

Die Variablen des Ergebnisvektors, die auch ILP-Variablen bezeichnet werden, können in Ergebnisvariablen und Hilfsvariablen unterteilt werden.

Die Ergebnisvariablen können die Lösung z.B. in folgenden binären Variablenmatrizen enthalten:

Welcher Job / welche Connection zu welchen Ereignissen ausgeführt wird:

$$s_{\text{event}} : (\mathcal{J} \cup \mathcal{X}) \times (\mathcal{CE} \cup \mathcal{LE}) \rightarrow \{0,1\} \quad (3.3.1)$$

Welcher Job auf welchem Core ausgeführt wird:

$$s_{\text{core}} : \mathcal{J} \times \mathcal{C} \rightarrow \{0,1\} \quad (3.3.2)$$

Welche Connection auf welchem Link abgebildet wird:

$$s_{\text{link}} : \mathcal{X} \times \mathcal{L} \rightarrow \{0,1\} \quad (3.3.3)$$

Zusätzlich können Hilfsvariablen den spätest möglichen Startzeitpunkt und frühestmöglicher Endzeitpunkt eines Jobs wiedergeben:

$$t_{\text{startJob}} : \mathcal{J} \rightarrow \mathbb{R}$$
$$t_{\text{stopJob}} : \mathcal{J} \rightarrow \mathbb{R} \quad (3.3.4)$$

Als Randbedingungen, auch ILP Einschränkungsfunktionen genannt, kommen je nach Anwendung viele verschiedene Bedingungen in Betracht. Einige davon sind im Folgenden beschrieben.

Randbedingungen sind z.B. die Einhaltung der Zeitvorgaben. Jeder Job ist vor seiner spezifizierten Deadline (maximale Bearbeitungszeit) fertig:

$$\underset{j \in \mathcal{J}}{\forall} : t_{\text{stopJob}}(j) \leq t_{\text{dl}}(j) \quad (3.4.1)$$

Eine maximale Bearbeitungszeit kann für eine, mehrere oder alle Teilaufgaben (Jobs) definiert sein. Für diese Randbedingung hätte die Koeffizientenmatrix beispielsweise für jeden Job, für den eine Deadline festgelegt ist, eine Zeile, die lauter 0-en aufweisen würde, außer in jenen Spalten, die zu der zugehörigen $t_{\text{StopJob}}(j)$-Variable des Ergebnisvektors gehören. Diese Koeffizienten würden z.B. den Wert 1 erhalten. Der Randbedingungsvektor würde dann die entsprechenden maximalen Bearbeitungszeiten $t_{d1}(j)$ als Randbedingungsparameter enthalten.

Weitere Randbedingungen können sich auf die Konsistenz des Zeitverhaltens richten. Beispielsweise startet jeder Job nach dem Zeitpunkt "0":

$$\forall_{j \in \mathcal{J}} : t_{\mathrm{startJob}}(j) \geq 0 \qquad (3.4.2)$$

Alle Events (Zeitintervalle), die einer Connection zugewiesen sind, starten frühestens nachdem der Quell-Job fertig ist:

$$\forall_{e \in \mathcal{LE}} \forall_{x \in \mathcal{X}} : s_{\mathrm{event}}(e,x) * t_{\mathrm{event}}(e) \geq s_{\mathrm{event}}(e,x) * t_{\mathrm{stopJob}}(\mathrm{source}(x))$$

Da der zweite Teil der Gleichung nicht linear ist, muss ein kleiner Kunstgriff angewandt werden. Sei $t_{max.Job}$ größer als größte vorkommende Stopzeit, und als Konstante gewählt:

$$\forall_{j \in \mathcal{J}} : t_{\mathrm{maxJob}} \geq t_{\mathrm{stopJob}}(j)$$

$$\forall_{e \in \mathcal{LE}} \forall_{x \in \mathcal{X}} : s_{\mathrm{event}}(e,x) * t_{\mathrm{event}}(e) \geq (s_{\mathrm{event}}(e,x) - 1) * t_{\mathrm{maxJob}} + t_{\mathrm{stopJob}}(\mathrm{source}(x)) \qquad (3.4.3)$$

Eine mögliche Variante, ein gültiges $t_{max.Job}$ zu berechnen, wäre:

$$t_{\mathrm{maxJob}} = \sum_{j \in \mathcal{J}} \sum_{c \in \mathcal{C}} d_{\mathrm{run}}(j,c) + \sum_{x \in \mathcal{X}} \sum_{l \in \mathcal{L}} d_{\mathrm{com}}(x,l)$$

Alle Events, die einer Connection zugewiesen sind, enden spätestens bevor der Ziel-Job zu rechnen beginnt. Ähnlich wie oben ist auch hier wieder ein kleiner Kunstgriff vonnöten.

$$\forall_{e \in \mathcal{LE}} \forall_{x \in \mathcal{X}} : s_{\mathrm{event}}(e,x) * (t_{\mathrm{event}}(e) + d_{\mathrm{event}}(e)) \leq s_{\mathrm{event}}(e,x) * t_{\mathrm{startJob}}(\mathrm{target}(x))$$

$$\forall_{e \in \mathcal{LE}} \forall_{x \in \mathcal{X}} : s_{\mathrm{event}}(e,x) * (t_{\mathrm{event}}(e) + d_{\mathrm{event}}(e)) \leq (1 - s_{\mathrm{event}}(e,x)) * t_{\mathrm{maxJob}} + t_{\mathrm{startJob}}(\mathrm{target}(x)) \qquad (3.4.4)$$

Ein Job darf erst dann anfangen zu rechnen, wenn alle seine Vorgänger fertig sind:

$$\forall_{x \in \mathcal{X}} : t_{\mathrm{stopJob}}(\mathrm{source}(x)) \leq t_{\mathrm{startJob}}(\mathrm{target}(x)) \qquad (3.4.5)$$

Diese Einschränkung ist nötig, da nicht jede Connection auf einem Link abgebildet werden muss, und daher die Gleichungen (3.4.3) und (3.4.4) diese Eigenschaft nicht sichergestellt hatten.

Jeder Job und jede Connection bekommen die benötige Rechenzeit zugesichert:

$$\forall_{x \in \mathcal{X}} : t_{\text{startJob}}(\text{target}(x)) - t_{\text{stopJob}}(\text{source}(x)) \geq \sum_{l \in \mathcal{L}} (s_{\text{link}}(x, l) * d_{\text{com}}(x, l))$$
$$\forall_{j \in \mathcal{J}} : t_{\text{stopJob}}(j) - t_{\text{startJob}}(j) \geq \sum_{c \in \mathcal{C}} (s_{\text{core}}(j, c) * d_{\text{run}}(j, c)) \qquad (3.4.6)$$

Jeder Job bekommt ausreichend viele Events zugewiesen, um in deren Zeit abgearbeitet werden zu können:

$$\forall_{j \in \mathcal{J}} : t_{\text{stopJob}}(j) - t_{\text{startJob}}(j) \leq \sum_{e \in \mathcal{CE}} (s_{\text{event}}(j, e) * d_{\text{event}}(e)) \qquad (3.4.7)$$

Alle dem Job zugewiesenen Events starten frühestens mit der Startzeit des Jobs und enden spätestens zum Endzeitpunkt des Jobs:

$$\forall_{j \in \mathcal{J}} \forall_{e \in \mathcal{CE}} : t_{\text{event}}(e) * s_{\text{event}}(j, e) \geq t_{\text{startJob}}(j) * s_{\text{event}}(j, e)$$

$$\forall_{j \in \mathcal{J}} \forall_{e \in \mathcal{CE}} : (t_{\text{event}}(e) + d_{\text{event}}(e)) * s_{\text{event}}(j, e) \leq t_{\text{stopJob}}(j) * s_{\text{event}}(j, e)$$

Um daraus lineare Gleichungen zu erhalten, kann der o.g. Kunstgriff wieder angewendet werden:

$$\forall_{j \in \mathcal{J}} \forall_{e \in \mathcal{CE}} : t_{\text{event}}(e) * s_{\text{event}}(j, e) \geq t_{\text{startJob}}(j) - (1 - s_{\text{event}}(j, e)) * t_{\text{maxJob}}$$
$$\forall_{j \in \mathcal{J}} \forall_{e \in \mathcal{CE}} : (t_{\text{event}}(e) + d_{\text{event}}(e)) * s_{\text{event}}(j, e) \leq t_{\text{stopJob}}(j) + (1 - s_{\text{event}}(j, e)) * t_{\text{maxJob}} \qquad (3.4.8)$$

Jede Connection bekommt ausreichend viele Events zugewiesen, um den Datentransport abwickeln zu können:

$$\forall_{x \in \mathcal{X}} : t_{\text{startJob}}(\text{target}(x)) - t_{\text{stopJob}}(\text{source}(x)) \leq \sum_{e \in \mathcal{LE}} (s_{\text{event}}(x, e) * d_{\text{event}}(e)) \qquad (3.4.9)$$

Weitere Randbedingungen können beispielsweise die Exklusivität der Resourcennutzung (Nutzung der Recheneinheiten und/oder Datenverknüpfugen) festlegen.

Den Events jeder Eventgruppe ist höchstens einem Job bzw. Connection zugeordnet:

$$\forall_{eg \in \mathcal{CEG}} : \sum_{j \in \mathcal{J}} \sum_{e \in eg} s_{\text{event}}(j, e) \leq 1$$
$$\forall_{eg \in \mathcal{LEG}} : \sum_{x \in \mathcal{X}} \sum_{e \in eg} s_{\text{event}}(x, e) \leq 1 \qquad (3.4.10)$$

Auch können Randbedingungen z.B. die Zuweisung der Resourcen betreffen.

Jeder Job ist exakt einem Core zugeordnet, jede Connection höchstens einem Link:

$$\underset{j\in\mathcal{J}}{\forall} : \sum_{c\in\mathcal{C}} s_{\text{core}}(j,c) = 1$$

$$\underset{x\in\mathcal{X}}{\forall} : \sum_{l\in\mathcal{L}} s_{\text{link}}(x,l) \leq 1 \qquad (3.4.11)$$

Zusätzlich kann die Konsistenz der Entscheidungsvariablen als Randbedingungen abgebildet werden.

Es muss sichergestellt sein, dass die Entscheidungsvariablen $S_{core}$, $S_{event}$ und $S_{link}$ zueinander konsistent sind.

Eine Connection darf nur dann einem Link zugeordnet werden, wenn ihr erzeugender und ihr verbrauchender Job je einem Endpunkt des Links zugeordnet sind:

$$\underset{x\in\mathcal{X}}{\forall}\ \underset{l\in\mathcal{L}}{\forall} : s_{\text{link}}(x,l) \leq \sum_{c\in\mathcal{C}t\mathcal{L}(l)} s_{\text{core}}(\text{source}(x),c)$$

$$\underset{x\in\mathcal{X}}{\forall}\ \underset{l\in\mathcal{L}}{\forall} : s_{\text{link}}(x,l) \leq \sum_{c\in\mathcal{C}t\mathcal{L}(l)} s_{\text{core}}(\text{target}(x),c) \qquad (3.4.12)$$

Ein Job darf nur dann einem Core zugewiesen werden, wenn für alle seine eingehenden Connections gilt, dass der Quelljob dieser Connections auf demselben Core liegt oder die Connection einem Link zugewiesen ist, der diesen Core erreicht.

$$\underset{c\in\mathcal{C}}{\forall}\ \underset{x\in\mathcal{X}}{\forall} : s_{\text{core}}(\text{target}(x),c) \leq s_{\text{core}}(\text{source}(x),c) + \sum_{l\in\mathcal{L}t\mathcal{C}(c)} s_{\text{link}}(x,l) \qquad (3.4.13)$$

Ein Event darf nur dann einem Job zugewiesen werden, wenn dieser Job auch dem zum Event gehörigen Core zugewiesen ist:

$$\underset{j\in\mathcal{J}}{\forall}\ \underset{c\in\mathcal{C}}{\forall}\ \underset{e\in\mathcal{CE}}{\forall} : s_{\text{event}}(j,e) * \text{is}_{\text{coreEvent}}(e,c) \leq s_{\text{core}}(j,c) \qquad (3.4.14)$$

Da ein Job nur einem Core zugewiesen sein darf, ist dadurch auch implizit sichergestellt, dass alle Events, die einem Job zugewiesen sind, auf demselben Core liegen.

Ein Event darf nur dann einer Connection zugewiesen werden, wenn diese Connection auch dem zum Event gehörigen Link zugewiesen ist:

$$\underset{x\in\mathcal{X}}{\forall}\ \underset{l\in\mathcal{L}}{\forall}\ \underset{e\in\mathcal{LE}}{\forall} : s_{\text{event}}(x,e) * \text{is}_{\text{linkEvent}}(e,l) \leq s_{\text{link}}(x,l) \qquad (3.4.15)$$

Da eine Connection nur einem Link zugewiesen sein darf ist dadurch implizit auch sichergestellt, dass alle Events, die einer Connection zugewiesen sind, auf demselben Link liegen.

Zum Finden einer möglichen Lösung ist es in dieser ILP-Formulierung nicht notwendig, eine Optimierungsfunktion (Optimierungsbedingung) anzugeben. Sobald alle Constraints (Randbedingungen) eingehalten werden, ist eine mögliche Lösung gegeben.

Eine mögliche Optimierung wäre die auf den Energieverbrauch. Wenn man ein einfaches Energiemodell zugrunde legt, dass die Leistung eines Cores und eines Links bei durch jeweils zwei konstante Werte (je nachdem, ob er gerade ausgelastet ist oder nicht) abgeschätzt werden kann, ergibt sich z.B. folgende Verteilung:

| RESOURCE | AUSGELASTET | STANDBY |
|---|---|---|
| Core<br>Link | $P_{\text{coreRunning}}$<br>$P_{\text{linkRunning}}$ | $P_{\text{coreStandby}}$<br>$P_{\text{linkStandby}}$ |

$$\underset{c\in\mathcal{C}}{\forall}: E_{\text{tot}}(c) = \sum_{e\in\mathcal{CE}} (\text{is}_{\text{coreEvent}}(e,c) * s_{\text{event}}(e,c) * P_{\text{coreRunning}} * d_{\text{event}}(e) + \text{is}_{\text{coreEvent}}(e,c) * (1 - s_{\text{event}}(e,c)) * P_{\text{coreStandby}} * d_{\text{event}}(e)) \quad (3.5.1)$$

$$\underset{l\in\mathcal{L}}{\forall}: E_{\text{tot}}(l) = \sum_{e\in\mathcal{LE}} (\text{is}_{\text{linkEvent}}(e,l) * s_{\text{event}}(e,l) * P_{\text{linkRunning}} * d_{\text{event}}(e) + \text{is}_{\text{coreEvent}}(e,l) * (1 - s_{\text{event}}(e,l)) * P_{\text{linkStandby}} * d_{\text{event}}(e)) \quad (3.5.2)$$

Die Optimierungsfunktion des ILP ist dann letztendlich der Gesamtenergieverbrauch des Systems:

$$\text{min:} \quad \sum_{c\in\mathcal{C}} E_{\text{tot}}(c) + \sum_{l\in\mathcal{L}} E_{\text{tot}}(l) \quad (3.5.3)$$

Die Laufzeit des ILP Solvers (ILP-Komplexität) hängt im Wesentlichen von der Anzahl der Gleichungen ($\text{num}_{\text{equations}}$) und der Anzahl der freien Variablen ($\text{num}_{\text{variables}}$) ab. Für den hier beschriebenen Algorithmus (ohne die in 3.5 beschriebenen Optimierungsfunktionen) gilt:

$$\begin{aligned}\text{num}_{\text{equations}} = & \underbrace{|\mathcal{J}|}_{\text{Gleichung (3.4.1)}} + \underbrace{|\mathcal{J}|}_{\text{Gleichung (3.4.2)}} + \underbrace{|\mathcal{LE}| * |\mathcal{X}|}_{\text{Gleichung (3.4.3)}} + \underbrace{|\mathcal{LE}| * |\mathcal{X}|}_{\text{Gleichung (3.4.4)}} + \\ & \underbrace{|\mathcal{X}|}_{\text{Gleichung (3.4.5)}} + \underbrace{|\mathcal{J}|}_{\text{Gleichung (3.4.6)}} + \underbrace{|\mathcal{J}|}_{\text{Gleichung (3.4.7)}} + \underbrace{2 * |\mathcal{J}| * |\mathcal{CE}|}_{\text{Gleichung (3.4.8)}} + \\ & \underbrace{|\mathcal{X}|}_{\text{Gleichung (3.4.9)}} + \underbrace{|\mathcal{CEG}| + |\mathcal{LEG}|}_{\text{Gleichung (3.4.10)}} + \underbrace{|\mathcal{J}| + |\mathcal{X}|}_{\text{Gleichung (3.4.11)}} + \underbrace{2 * |\mathcal{X}| * |\mathcal{L}|}_{\text{Gleichung (3.4.12)}} + \\ & \underbrace{|\mathcal{C}| * |\mathcal{X}|}_{\text{Gleichung (3.4.13)}} + \underbrace{|\mathcal{J}| * |\mathcal{C}| * |\mathcal{CE}|}_{\text{Gleichung (3.4.14)}} + \underbrace{|\mathcal{X}| * |\mathcal{L}| * |\mathcal{LE}|}_{\text{Gleichung (3.4.15)}} \quad (3.6.1)\end{aligned}$$

$$\begin{aligned}\text{num}_{\text{variables}} = & \underbrace{(|\mathcal{J}| + |\mathcal{X}|) * (|\mathcal{CE}| + |\mathcal{LE}|)}_{\text{Gleichung (3.3.1)}} + \underbrace{|\mathcal{J}| * |\mathcal{C}|}_{\text{Gleichung (3.3.2)}} + \underbrace{|\mathcal{X}| * |\mathcal{X}|}_{\text{Gleichung (3.3.3)}} + \\ & \underbrace{2 * |\mathcal{J}|}_{\text{Gleichung (3.3.4)}} \quad (3.6.2)\end{aligned}$$

Fig. 9 zeigt als Beispiel eine schematische Darstellung eines linearen Gleichungssystems 900 in Form einer Koeffizientenmatrix A, eines Ergebnisvektors x und eines Randbedingungsvektors b. Dabei ist das Zeitintervall mit ZI(n) abgekürzt und läuft von 0 bis N, was den betrachteten Zeitraum darstellt. Ferner sind die Teilaufgaben mit TA(1) mit 1 von 1 bis L, die Recheneinheiten mit RE(m) mit m von 1 bis M, die Datenverbindungen zwischen den Teilaufgaben mit DV(j) mit j von 1 bis J, die Datenverknüpfungen zwischen den Recheneinheiten mit DK(i) mit i von 1 bis I, die Randbedingungen mit RB(q) mit q von 1 bis Q, die Koeffizienten der Koeffizientenmatrix mit $a_{r,p}$ mit r von 1 bis R und p von 1 bis P und die Randbedingungsparameter des Randbedingungsvektors mit RBP(q) mit q = 1 bis Q abgekürzt. Wie zuvor beschrieben, kann der Ergebnisvektor x zusätzlich Hilfsvariablen umfassen, wie z.B. den Startzeitpunkt und den Endzeitpunkt eines Jobs.

Der Ergebnisvektor x enthält in diesem Beispiel eine Variable für jede Kombination aus Zeitintervall, Teilaufgabe und Recheneinheit sowie jede Kombination von Zeitintervall, Datenverbindung und Datenverknüpfung und ebenso jede Kombination von Teilaufgabe und Recheneinheit sowie jede Kombination von Datenverbindung und Datenverknüpfung. Für all diese Variablen enthält die Koeffizientenmatrix A in ihren Spalten je einen Koeffizienten für jede Randbedingung, dessen Wert durch die jeweilige Randbedingung festgelegt ist. Umgekehrt enthält jede Zeile der Koeffizientenmatrix A einen Parameter, dessen Wert durch die jeweilige Randbedingung festgelegt ist, für jede Variable des Ergebnisvektor x. Dazugehörig enthält der Randbedingungsvektor b für jede Randbedingung einen Randbedingungsparameter RBP(q).

Um das Gleichungssystem zu lösen, muss für jede Variable des Ergebnisvektors x ein Wert gefunden werden, so dass eine Multiplikation der Koeffizientenmatrix A mit dem Ergebnisvektor x kleiner gleich oder größer gleich dem Randbedingungsvektor b ist.

Allgemein können durch das lineare Gleichungssystem Randbedingungen berücksichtigt werden, die sowohl einer Ungleichung als auch einer Gleichung entsprechen. Randbedingungen, die einer Gleichung entsprechen können dabei beispielsweise in zwei Ungleichungen zerlegt werden.

Fig. 10A zeigt ein Beispiel für einen Datenflussgraphen mit drei Jobs j1, j2, j3 (oder jt1,jt2,jt3) von denen Job1 Daten für Job2 über eine erste Datenverbindung dt1 und Daten für Job 3 über eine zweite Datenverbindung dt2 liefert. Dabei sind als Randbedingungen für die maximale Bearbeitungszeit (max. BZ) von 15 ms und für Job 3 von 20 ms festgelegt. Mit pl,p2,p3,p4 sind zusätzlich Eingangsports und Ausgangsports der Jobs angedeutet. Diese Aufgabe soll mit Hilfe einer Prozessorarchitektur (Plattform) mit zwei Recheneinheiten RE1, RE2 (oder ct1, ct2) mit einer Datenverknüpfung DK1 (link1) zwischen den beiden Recheneinheiten, wie es in Fig. 10b gezeigt ist, realisiert werden.

Um eine Lösung für dieses Problem zu finden, kann beispielsweise ein Zeitraum von 20 ms betrachtet werden, da bis zu diesem Zeitpunkt laut Vorgabe alle Jobs spätestens abgearbeitet sein müssen (unabhängig davon, dass Job 2 bereits nach 15 ms beendet sein soll). Dieser betrachtete Zeitraum kann in beliebig kleine Zeitintervalle unterteilt werden, um das zeitliche Verhalten der Lösung des Problems in beliebiger Genauigkeit zu berechnen.

Fig. 10c zeigt ein Beispiel für einen Ergebnisvektor für die in Fig. l0a und lOb gegebene Problemstellung. Dabei sind neben den berechneten Werten der Variablen des Ergebnisvektors die Namen der Variablen angegeben. Dabei legen alle Variablen, die mit s_event anfangen das genaue zeitliche Verhalten der Lösung des Problems dar. Mit Event ist dabei das Zeitintervall gemeint, dessen Nummer in eckigen Klammern [0], ... [19] (entspricht dem betrachteten Zeitraum von 20 ms) angegeben ist. Des Weiteren ist mit job@core die Bearbeitung des jeweiligen Jobs auf der jeweiligen Recheneinheit (core) gemeint und mit job- job@link die Realisierung einer Datenverbindung (job-> job) auf einer bestimmten Datenverknüpfung (link) gemeint. Zusätzlich sind als Hilfsvariablen die Start- und Stopintervalle (tstartjob, tstopjob) der einzelnen Jobs angegeben.

So fängt beispielsweise Job 1 im Zeitintervall 0 an (tstartjob(jobl) = 0) und endet im Intervall 7 (tstopjob(job1) = 7) und wird von Recheneinheit 2 bearbeitet (s_corejob1@core2=1).

Zur Kostenbeschreibung oder als Randbedingungen wurden für dieses Beispiel festgelegt, dass die Recheneinheit 1 und die Recheneinheit 2 gleichartig sind (ct1=ct2), dass die Datenverbindung dtl auf der Datenverknüpfung DK1 2 ms benötigt (dtl auf link1→ 2ms (1c + 1*1c)), dass die Datenverbindung dt2 auf der Datenverknüpfung DK1 3 ms benötigt (dt2 auf link1 -> 3ms (1c + 2*1c)), dass die Bearbeitung von Job1 7 ms benötigt (jt1 → 7ms (7c), dass die Bearbeitung von Job2 6 ms benötigt (jt2 → 6ms (6c)) und dass Job3 6 ms benötigt (jt3 → 6ms (6c)). Der betrachtete Zeitraum (total time) beträgt 20 ms und ist in 20 Zeitintervalle zu je 1 ms unterteilt, was einer Frequenz von 1000 Hz entspricht. Dementsprechend sind die Zeitintervalle pro Recheneinheit (events per core) und die Zeitintervalle pro Datenverknüpfung (event per link) auf 20 und die Zeitmenge pro Sekunde (time quantums per second) auf 1000 gesetzt. Die Anzahl der Fließbandverarbeitungsstufen (stages) ist auf 1 festgelegt.

Ein weiteres Beispiel für einen Datenflussgraphen ist in Fig. 11a gezeigt. Dieser beinhaltet drei Jobs j1, j2 und j3 sowie Datenverbindungen zwischen Job1 und Job3 und Job2 und Job3. Zusätzlich sind mit p1,p2,p3,p4 wieder Eingangsports und Ausgangsports der Jobs angedeutet. In diesem Beispiel sind alle Jobs vom selben Typ (benötigen gleiche Bearbeitungszeit) sowie alle Datenverbindungen vom selben Typ (eine Datenübertragung über alle Datenverbindungen kostet vergleichbar viel Zeit). Zusätzlich ist eine maximale Bearbeitungszeit für Job 3 von 12 Zeitintervallen festgesetzt.

Die in Fig. 11a gezeigte Aufgabe soll beispielsweise mit Hilfe einer Prozessorarchitektur, wie sie in Fig. 11b gezeigt ist, bearbeitet werden. Der Strukturgraph in Fig. 11b zeigt drei Recheneinheiten c1, c2, c3 und drei Datenverknüpfungen i1, i2, i3 zwischen den Recheneinheiten, wobei Recheneinheit c1 mit Recheneinheit c2 über Datenverknüpfung i3 und mit Recheneinheit c3 über Datenverknüpfung i2 verbunden ist. Zusätzlich ist Recheneinheit c2 über Datenverknüpfung i1 mit Recheneinheit c3 verbunden. In diesem Beispiel sind alle Recheneinheiten vom selben Typ (benötigen für gleiche Jobs gleiche Bearbeitungszeit) und alle Datenverknüpfungen vom selben Typ (gleiche Daten werden von allen Datenverknüpfungen gleich schnell übertragen).

Zusätzlich ist für die Bearbeitungszeiten festgelegt, dass alle Jobs auf allen Recheneinheiten fünf Zeiteinheiten (Zeitintervalle) und alle Datenverbindungen auf allen Datenverknüpfungen eine Zeiteinheit (Zeitintervall) benötigen. Für die globale Zeitplanung ist eine Periode von sechs Zeiteinheiten und eine Anzahl von Fließbandverarbeitungsstufen von 2 festgelegt. Als Ergebnis ist eine Zuweisung von allen Jobs auf unterschiedliche Recheneinheiten zu erwarten.

Ein möglicher Ergebnisvektor für das in Fig. 11a und Fig. 11b gezeigte Problem ist in Fig. 11c dargestellt. Dabei sind neben den berechneten Werten der Variablen des Ergebnisvektors die Namen der Variablen angeführt. Diese entsprechen von der Nomenklatur jenen von Fig. 10c.

Graphisch ist das durch den Ergebnisvektor erhaltene zeitliche Verhalten der Zuweisung der Teilaufgaben zu den Recheneinheiten in dem in Fig. 12 dargestellten Zeitplan 1200 illustriert. In dieser gefundenen Zuweisung wird Job j1 in den Zeitintervallen 0 bis 4 von Recheneinheit c3, Job j2 in den Zeitintervallen von 0 bis 4 von Recheneinheit c2 und Job j3 in den Zeitintervallen 6 bis 10 von Recheneinheit c1 bearbeitet. Zusätzlich findet eine Datenübertragung zwischen Job j1 und Job j3 im Zeitintervall 5 auf Datenverknüpfung 12 und eine Datenübertragung von Job j2 auf Job j3 im Zeitintervall 5 auf Datenverknüpfung 13 statt.

Durch diese Zuweisung der Teilaufgaben auf die Recheneinheiten wird wie vorgegeben eine Fließbandverarbeitung mit zwei Stufen (Pipelining) ermöglicht, welches jedoch im Zeitplan 1200 nicht eingezeichnet ist.

Wie die vorherigen Ausführungen und Beispiele zeigen, kann das erfindungsgemäße Konzept das Problem des Verteilens eines Softwaresystems (eines Computerprogramms) auf unterschiedliche Recheneinheiten paralleler Plattformen (Prozessorarchitekturen), beispielsweise Prozessorkerne, ermöglichen.

Das erfindungsgemäße Konzept schafft beispielsweise einen Algorithmus und die daraus resultierende Problembeschreibungsform, welche das Partitionierungsproblem von Software auf parallelen Plattformen auf ein lineares Gleichungssystem, welches als Eingabe für einen ILP-Lösungsalgorithmus verwendet wird, abbildet. Durch Verwendung des beschriebenen Konzepts besteht die Möglichkeit die Ausführungsplattform bestehend aus Hardware und Software sehr detailliert zu modellieren, und in das Gleichungssystem einzubeziehen. Die entwickelte Problembeschreibungsform bietet darüber hinaus eine Schnittstelle, die weitere Einschränkungen und Kostenfunktionen aufnimmt. Durch den beschriebenen Abbildungsalgorithmus, welcher das initiale Problem in eine spezielle Beschreibungsform abbildet, kann das initiale, NP-Schwere Problem in ein effizient lösbares Format transformiert werden.

Dies kann vielerlei Wirkungen und Vorteile haben. Momentan werden Softwaremodelle manuell partitioniert. Dies ist möglich, da heutige Mehrkernprozessoren sehr einfach gestaltet sind, nur wenige Kerne besitzen, und die Kommunikation zwischen den Kernen ebenfalls sehr einfach gehalten ist. Zukünftige Mehrkernprozessoren, wie beispielsweise der Tile Gx Prozessor von Tilera, bestehen aus sehr vielen Prozessorkernen, die aufgrund ihres Kommunikationsverhaltens und aufgrund der Anbindung einzelner Kerne an Geräten nicht mehr gleichwertig sind. Daher wird es sehr schwierig, eine effiziente Partitionierung (Zuweisung der Teilaufgaben zu Recheneinheiten) und einen effizienten Schedule (Zeitplan) für Softwaremodelle zu finden, der diese Prozessoren (Prozessorarchitektur) optimal ausnutzen kann.

Eine Abbildung auf ein ILP-Problem kann unter anderem die folgenden Vorteile bieten:

> Die Entwickler nutzen eine ihnen bekannte, intuitive und inhärent parallele Modellierungssprache. Das Finden einer effizienten Partitionierung wird darauf basierend automatisiert und damit wesentlich beschleunigt bzw. bei komplexen Systemen überhaupt erst ermöglicht.

Umfangreiche Modell können dadurch optimal auf komplexe Plattformen abgebildet werden.

Optimal partitionierte Softwaresysteme können Resourcen effizient nutzen, und so Hardwarekoten und/oder Energie sparen. Bei großen Stückzahlen sind dies signifikante Einsparungen.

Es ist möglich, die Verfügbarkeit von Geräten auf den jeweiligen Kernen oder die Nähe zu Geräten, und die daraus resultierenden Kosten zu berücksichtigen.

Ferner lassen sich Echtzeiteigenschaften definieren, beispielsweise maximale Bearbeitungs- und Latenzzeiten.

Defekte Kerne lassen sich ausblenden, so dass Softwaremodelle um diese herum partitioniert werden.

Realistische Modelle der Kommunikationseinrichtungen des Prozessors werden für die Partitionierung berücksichtigt.

Es ist möglich, heterogene Prozessoren mit speziellen Befehlssätzen, unterschiedlicher Menge an lokalem Speicher, oder ähnlichem zu modellieren und während der Partitionierung zu berücksichtigen.

Die konkrete Abbildung auf ein ILP-Problem kann auf unterschiedliche Arten erfolgen, von denen die zuvor beschrieben Abbildungen konkrete Beispiel darstellen. Der dafür verwendete Algorithmus ist deterministisch und kann durch eine Analyse von Ausgabedaten für bekannte Eingaben untersucht werden.

Mehrkernprozessoren stellen die unabwendbare Zukunft eingebetteter Hardwareplattformen dar. Effiziente Parallelisierungen von Software, zu deren Finden die hier vorgestellte Algorithmus beiträgt, sind unabdingbar um diese bestmöglich auslasten zu können, und damit ermöglichen sie durch eine Reduktion der Kernzahl und eine Verringerung der Taktfrequenz signifikante Einsparungen. Weiterhin ist es beispielsweise für Prozessoren mit sehr vielen Kernen möglich, Partitionierungsschemata zu finden, welche defekte Kerne umgehen. Auf diese Weise lässt sich die Ausbeute bei der Prozessorherstellung steigern, und Herstellungskosten senken. Ähnliches kann beispielsweise bei der Reduktion der Cachegröße in Prozessorserien angewandt werden.

Fig. 13 zeigt ein Blockdiagramm einer Vorrichtung 1300 zum Zuweisen einer Mehrzahl von Teilaufgaben einer Aufgabe zu einer Mehrzahl von Recheneinheiten einer vorgegebenen Prozessorarchitektur entsprechend eines Ausführungsbeispiels gemäß der Erfindung. Die Vorrichtung 1300 umfasst einen lineares Optimierungsproblem-Prozessor 1320, der ausgelegt ist, um eine Zuweisung 1322 jeder Teilaufgabe der Mehrzahl von Teilaufgaben zu einer Recheneinheit der vorgegebenen Prozessorarchitektur basierend auf einem linearen Gleichungssystem 1312 zu bestimmen. Das lineare Gleichungssystem 1312 basiert auf einer parametrisierten Beschreibung der Mehrzahl von Teilaufgaben der Aufgabe, einer parametrisierten Beschreibung der vorgegebenen Prozessorarchitektur und einer Mehrzahl von Randbedingungen. Die Zuweisung 1322 jeder Teilaufgabe zu den Recheneinheiten wird bestimmt, so dass alle Randbedingungen erfüllt sind.

Optional kann die Vorrichtung 1300 zusätzlich einen Gleichungssystemerzeuger 1310 aufweisen, der mit dem lineares Optimierungsproblem-Prozessor 1320, der auch ILP-Prozessor bezeichnet werden kann, verbunden ist. Der Gleichungssystemerzeuger 1310 ist ausgelegt, um das lineare Gleichungssystem 1312 basierend auf der parametrisierten Beschreibung der Mehrzahl von Teilaufgaben der Aufgabe, der parametrisierten Beschreibung der vorgegebenen Prozessorarchitektur und der Mehrzahl von Randbedingungen zu generieren.

Der ILP-Prozessor 1320 (oder auch ILP-Löser, ILP-Solver) und der optionale Gleichungssystemerzeuger 1310 können unabhängige Hardwareeinheiten oder Teil eines Computer oder Mikrocontrollers sowie Computerprogramme oder Softwareprodukte zum Ausführen auf einem Computer oder Mikrocontroller sein.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Allgemein kann das beschriebene Verfahren ein Bereitstellen eines von einem (zentralen) Controller oder einer (zentralen) Steuereinheit (scheduler) der Prozessorarchitektur verarbeitbaren Datensatzes umfassen, wobei der Datensatz Informationen über die bestimmte Zuweisung aufweist. Solch ein Datensatz kann von dem Controller oder der Steuereinheit der Prozessorarchitektur eingelesen werden und eine entsprechende Zuweisung der Teilaufgaben auf die Recheneinheiten der Prozessorarchitektur vornehmen. Beispielsweise kann der zuvor beschriebene Ergebnisvektor, der alle Informationen über die bestimmte Zuweisung enthält, in ein von dem Controller oder der Steuereinheit verarbeitbares Datenformat umgewandelt werden. Alternativ kann auch der Controller oder die Steuereinheit der Prozessorarchitektur ausgelegt sein, um einen solchen Ergebnisvektor direkt verarbeiten zu können.

## Patentansprüche

**1.** Verfahren (100, 200) zum Zuweisen einer Mehrzahl von Teilaufgaben einer Aufgabe zu einer Mehrzahl von Recheneinheiten einer vorgegebenen Prozessorarchitektur, mit folgenden Schritten:

Bereitstellen (110) eines linearen Gleichungssystems, wobei das lineare Gleichungssystem auf einer nichtzyklischen parametrisierten Beschreibung der Mehrzahl von Teilaufgaben der Aufgabe, einer parametrisierten Beschreibung der vorgegebenen Prozessorarchitektur und einer Mehrzahl von Randbedingungen basiert; und
Bestimmen (120) einer Zuweisung jeder Teilaufgabe der Mehrzahl von Teilaufgaben zu einer Recheneinheit der vorgegebenen Prozessorarchitektur basierend auf dem linearen Gleichungssystem, so dass alle Randbedingungen erfüllt sind,
**dadurch gekennzeichnet, dass** die parametrisierte Beschreibung der Mehrzahl von Teilaufgaben eine Mehrzahl von Datenverbindungen zwischen den Teilaufgaben definiert und die parametrisierte Beschreibung der vorgegebenen Prozessorarchitektur eine Mehrzahl von Datenverknüpfungen zwischen den Recheneinheiten definiert, wobei das lineare Gleichungssystem ferner auf einer parametrisierten Kostenbeschreibung basiert, wobei die parametrisierte Kostenbeschreibung für jede Teilaufgabe und jede Datenverbindung zwischen Teilaufgaben angibt, wie viele Zeitintervalle jede Recheneinheit für eine Bearbeitung jeder Teilaufgabe benötigt und wie viele Zeitintervalle jede Datenverknüpfung zwischen den Recheneinheiten für eine Realisierung jeder Datenverbindung benötigt.

**2.** Verfahren gemäß Anspruch 1, wobei das Bestimmen (120) der Zuweisung jeder Teilaufgabe durch ein Lösen des linearen Gleichungssystems basierend auf einem linearen Optimierungsalgorithmus für ganze Zahlen erfolgt.

**3.** Verfahren gemäß Anspruch 1 oder 2, wobei das Bereitstellen (110) des linearen Gleichungssystems ein Bestimmen (210) des linearen Gleichungssystems basierend auf der parametrisierten Beschreibung der Mehrzahl von Teilaufgaben der Aufgabe, der parametrisierten Beschreibung der vorgegebenen Prozessorarchitektur und der Mehrzahl von Randbedingungen umfasst.

**4.** Verfahren gemäß einem der Ansprüche 1 bis 3, wobei das lineare Gleichungssystem als Koeffizienten ausschließlich ganzzahlige Werte aufweist.

**5.** Verfahren gemäß einem der Ansprüche 1 bis 4, wobei das lineare Gleichungssystem für jede Randbedingung zumindest eine Gleichung aufweist.

**6.** Verfahren gemäß einem der Ansprüche 1 bis 5, wobei die Bestimmung (120) der Zuweisung jeder Teilaufgabe zu den Recheneinheiten zeitaufgelöst über vordefinierte Zeitintervalle eines betrachteten Zeitraums erfolgt.

7. Verfahren gemäß einem der Ansprüche 1 bis 6, wobei das lineare Gleichungssystem durch eine Koeffizientenmatrix, einen Ergebnisvektor und einen Randbedingungsvektor repräsentiert wird.

8. Verfahren gemäß Anspruch 7, wobei jede Spalte der Koeffizientenmatrix einer Variable des Ergebnisvektors zugeordnet ist und jede Zeile der Koeffizientenmatrix gemeinsam mit einem dazugehörigen Parameter des Randbedingungsvektors zumindest einen Teil einer Randbedingung der Mehrzahl von Randbedingungen repräsentiert.

9. Verfahren gemäß Anspruch 7 oder 8, wobei der Ergebnisvektor eine Variable für jede Kombination aus Teilaufgabe der Mehrzahl von Teilaufgaben und Recheneinheit der Mehrzahl von Recheneinheiten aufweist, wobei bei der Bestimmung (120) der Zuweisung für jede dieser Variablen ein Wert berechnet wird, der angibt, ob eine Teilaufgabe einer Recheneinheit zugewiesen ist.

10. Verfahren gemäß einem der Ansprüche 7 bis 9, wobei die parametrisierte Beschreibung der Mehrzahl von Teilaufgaben eine Mehrzahl von Datenverbindungen zwischen den Teilaufgaben definiert und die parametrisierte Beschreibung der vorgegebenen Prozessorarchitektur eine Mehrzahl von Datenverknüpfungen zwischen den Recheneinheiten definiert, wobei der Ergebnisvektor eine Variable für jede Kombination aus Datenverbindung zwischen den Teilaufgaben und Datenverknüpfung zwischen den Recheneinheiten aufweist, wobei bei der Bestimmung (120) der Zuweisung für jede dieser Variablen ein Wert berechnet wird, der angibt, ob eine Datenverbindung einer Datenverknüpfung zugewiesen ist.

11. Verfahren gemäß Ansprüchen 7 bis 10, wobei die parametrisierte Beschreibung der Mehrzahl von Teilaufgaben eine Mehrzahl von Datenverbindungen zwischen den Teilaufgaben definiert und die parametrisierte Beschreibung der vorgegebenen Prozessorarchitektur eine Mehrzahl von Datenverknüpfungen zwischen den Recheneinheiten definiert, wobei der Ergebnisvektor eine Variable für jede Kombination aus Teilaufgabe, Recheneinheit und Zeitintervall eines betrachteten Zeitraums aufweist und eine Variable für jede Kombination aus Datenverbindung zwischen den Teilaufgaben, Datenverknüpfung zwischen den Recheneinheiten und Zeitintervall des betrachteten Zeitraums aufweist, wobei bei der Bestimmung (120) der Zuweisung für jede dieser Variablen ein Wert berechnet wird, der angibt, ob eine Teilaufgabe einer Recheneinheit in einem Zeitintervall zugewiesen oder eine Datenverbindung einer Datenverknüpfung in einem Zeitintervall zugewiesen ist.

12. Verfahren gemäß einem der Ansprüche 1 bis 11, wobei das Bestimmen (120) der Zuweisung jeder Teilaufgabe zu einer Recheneinheit unter Berücksichtigung einer wiederholten Bearbeitung der Aufgabe durch die vorgegebene Prozessorarchitektur erfolgt, wobei eine zeitlich zuletzt zu bearbeitende Teilaufgabe der Aufgabe einer ersten Bearbeitung der Aufgabe später fertig bearbeitet ist als ein Beginn einer Bearbeitung einer zeitlich als erstes zu bearbeitenden Teilaufgabe der Aufgabe einer zweiten, späteren Bearbeitung der Aufgabe.

13. Verfahren gemäß einem der Ansprüche 1 bis 12, das ein Bestimmen (230) einer optimierten Zuweisung jeder Teilaufgabe der Mehrzahl von Teilaufgaben zu einer Recheneinheit der vorgegebenen Prozessorarchitektur basierend auf einer Optimierungsbedingung aufweist.

14. Verfahren gemäß Anspruch 13, wobei die Optimierungsbedingung die Bestimmung einer Zuweisung, die einen minimalen Energieverbrauch der Prozessorarchitektur, einen minimalen Speicherbedarf oder eine minimale Latenzzeit aufweist, ist.

15. Verfahren gemäß einem der Ansprüche 1 bis 14, wobei die parametrisierte Beschreibung der Mehrzahl der Teilaufgaben der Aufgabe auf einem Datenflussgraphen basiert.

16. Verfahren gemäß einem der Ansprüche 1 bis 15, wobei die parametrisierte Beschreibung der vorgegebenen Prozessorarchitektur auf einem Strukturgraphen basiert.

17. Verfahren gemäß einem der Ansprüche 1 bis 16, das ferner ein Bereitstellen eines von einem Controller oder einer Steuereinheit der Prozessorarchitektur verarbeitbaren Datensatzes umfasst, wobei der Datensatz Informationen über die bestimmte Zuweisung enthält.

18. Vorrichtung (1300) zum Zuweisen einer Mehrzahl von Teilaufgaben einer Aufgabe zu einer Mehrzahl von Recheneinheiten einer vorgegebenen Prozessorarchitektur, mit folgendem Merkmal:

einem lineares Optimierungsproblem-Prozessor (1320), der ausgelegt ist, um eine Zuweisung jeder Teilaufgabe der Mehrzahl von Teilaufgaben zu einer Recheneinheit der vorgegebenen Prozessorarchitektur basierend auf einem linearen Gleichungssystem zu bestimmen, wobei das lineare Gleichungssystem auf einer nichtzyklischen parametrisierten Beschreibung der Mehrzahl von Teilaufgaben der Aufgabe, einer parametrisierten Beschreibung der vorgegebenen Prozessorarchitektur und einer Mehrzahl von Randbedingungen basiert, und wobei die Zuweisung jeder Teilaufgabe bestimmt wird, sodass alle Randbedingungen erfüllt sind,
**dadurch gekennzeichnet, dass** die parametrisierte Beschreibung der Mehrzahl von Teilaufgaben eine Mehrzahl von Datenverbindungen zwischen den Teilaufgaben definiert und die parametrisierte Beschreibung der vorgegebenen Prozessorarchitektur eine Mehrzahl von Datenverknüpfungen zwischen den Recheneinheiten definiert, wobei das lineare Gleichungssystem ferner auf einer parametrisierten Kostenbeschreibung basiert, wobei die parametrisierte Kostenbeschreibung für jede Teilaufgabe und jede Datenverbindung zwischen Teilaufgaben angibt, wie viele Zeitintervalle jede Recheneinheit für eine Bearbeitung jeder Teilaufgabe benötigt und wie viele Zeitintervalle jede Datenverknüpfung zwischen den Recheneinheiten für eine Realisierung jeder Datenverbindung benötigt.

**19.** Vorrichtung gemäß Anspruch 18, die einen Gleichungssystemerzeuger (1320) aufweist, der ausgelegt ist, um das lineare Gleichungssystem basierend auf der parametrisierten Beschreibung der Mehrzahl von Teilaufgaben der Aufgabe, der parametrisierten Beschreibung der vorgegebenen Prozessorarchitektur und der Mehrzahl von Randbedingungen zu generieren.

**20.** Computerprogramm mit einem Programmcode zur Durchführung eines Verfahrens gemäß einem der Ansprüche 1 bis 17, wenn das Computerprogramm auf einem Computer oder Mikrocontroller abläuft.

## Claims

**1.** Method (100, 200) for allocating a plurality of subtasks of a task to a plurality of computing units of a predefined processor architecture, the method comprising:

providing (110) a linear equation system, the linear equation system being based on a non-cyclic parameterized description of the plurality of subtasks of the task, on a parameterized description of the predefined processor architecture, and on a plurality of boundary conditions; and
determining (120) allocation of each subtask of the plurality of subtasks to a computing unit of the predefined processor architecture on the basis of the linear equation system such that all of the boundary conditions are met,
**characterized in that** the parameterized description of the plurality of subtasks defines a plurality of data connections between the subtasks, and the parameterized description of the predefined processor architecture defines a plurality of data links between the computing units, the linear equation system further being based on a parameterized cost description, said parameterized cost description indicating, for each subtask and each data connection between subtasks, the number of time intervals required by each computing unit for processing each subtask, and the number of time intervals required by each data link between the computing units for implementing each data connection.

**2.** Method as claimed in claim 1, wherein said determining (120) of the allocation of each subtask is effected by solving the linear equation system on the basis of a linear optimization algorithm for integers.

**3.** Method as claimed in claim 1 or 2, wherein said provision (110) of the linear equation system includes determining (210) the linear equation system on the basis of the parameterized description of the plurality of subtasks of the task, of the parameterized description of the predefined processor architecture, and of the plurality of boundary conditions.

**4.** Method as claimed in any of claims 1 to 3, the linear equation system comprising exclusively integral values as coefficients.

**5.** Method as claimed in any of claims 1 to 4, the linear equation system comprising at least one equation for each boundary condition.

**6.** Method as claimed in any of claims 1 to 5, said determining (120) of the allocation of each subtask to the computing units being effected in a manner resolved in time over predefined time intervals of a period contemplated.

7. Method as claimed in any of claims 1 to 6, the linear equation system being represented by a coefficient matrix, a result vector and a boundary-condition vector.

8. Method as claimed in claim 7, wherein each column of the coefficient matrix is associated with a variable of the result vector, and each row of the coefficient matrix represents, along with an associated parameter of the boundary-condition vector, at least part of a boundary condition of the plurality of boundary conditions.

9. Method as claimed in claim 7 or 8, wherein the result vector comprises a variable for each combination of a subtask of the plurality of subtasks and a computing unit of the plurality of computing units, wherein when determining (120) the allocation, a value is calculated, for each of said variables, which indicates whether or not a subtask is allocated to a computing unit.

10. Method as claimed in any of claims 7 to 9, wherein the parameterized description of the plurality of subtasks defines a plurality of data connections between the subtasks, and the parameterized description of the predefined processor architecture defines a plurality of data links between the computing units, wherein the result vector comprises a variable for each combination of a data connection between the subtasks and a data link between the computing units, wherein when determining (120) the allocation, a value is calculated, for each of said variables, which indicates whether or not a data connection is allocated to a data link.

11. Method as claimed in any of claims 7 to 10, wherein the parameterized description of the plurality of subtasks defines a plurality of data connections between the subtasks, and the parameterized description of the predefined processor architecture defines a plurality of data links between the computing units, wherein the result vector comprises a variable for each combination of subtask, computing unit and time interval of a period contemplated, and a variable for each combination of a data connection between the subtasks, a data link between the computing units, and a time interval of the period contemplated, wherein when determining (120) the allocation, a value is calculated, for each of said variables, which indicates whether a subtask is allocated to a computing unit in a time interval or whether a data connection is allocated to a data link in a time interval.

12. Method as claimed in any of claims 1 to 11, wherein said determining (120) of the allocation of each subtask to a computing unit is effected while taking into account repeated processing of the task by the predefined processor architecture, wherein processing of such a subtask, of the task of a first processing of said task, which is the last in time to be processed, will be completed at a later point in time than a beginning of a processing of a subtask, to be processed first in time, of the task of a second, later processing of said task.

13. Method as claimed in any of claims 1 to 12, comprising determining (230) optimized allocation of each subtask of the plurality of subtasks to a computing unit of the predefined processor architecture on the basis of an optimization condition.

14. Method as claimed in claim 13, wherein the optimization condition is the determination of an allocation having a minimum energy consumption of the processor architecture, a minimum memory requirement, or a minimum latency period.

15. Method as claimed in any of claims 1 to 14, wherein the parameterized description of the plurality of subtasks of the task is based on a data flow graph.

16. Method as claimed in any of claims 1 to 15, wherein the parameterized description of the predefined processor architecture is based on a structure graph.

17. Method as claimed in any of claims 1 to 16, further comprising providing a data set that can be processed by a controller or a control unit of the processor architecture, said data set containing information about the allocation determined.

18. Device (1300) for allocating a plurality of subtasks of a task to a plurality of computing units of a predefined processor architecture, the device comprising:

a linear optimization problem processor (1320) configured to determine allocation of each subtask of the plurality of subtasks to a computing unit of the predefined processor architecture on the basis of a linear equation system, the linear equation system being based on a non-cyclic parameterized description of the plurality of subtasks of the task, on a parameterized description of the predefined processor architecture, and on a plurality of boundary conditions, and allocation of each subtask is determined such that all of the boundary conditions are met,

**characterized in that** the parameterized description of the plurality of subtasks defines a plurality of data connections between the subtasks, and the parameterized description of the predefined processor architecture defines a plurality of data links between the computing units, the linear equation system further being based on a parameterized cost description, said parameterized cost description indicating, for each subtask and each data connection between subtasks, the number of time intervals required by each computing unit for processing each subtask, and the number of time intervals required by each data link between the computing units for implementing each data connection.

**19.** Device as claimed in claim 18, comprising an equation system generator (1320) configured to generate the linear equation system on the basis of the parameterized description of the plurality of subtasks of the task, of the parameterized description of the predefined processor architecture, and of the plurality of boundary conditions.

**20.** Computer program comprising a program code for performing a method as claimed in any of claims 1 to 17, when the computer program runs on a computer or microcontroller.

## Revendications

**1.** Procédé (100, 200) pour attribuer une pluralité de tâches partielles d'une tâche à une pluralité d'unités de calcul d'une architecture de processeur prédéterminée, comprenant les étapes suivantes consistant à:

préparer (110) un système d'équations linéaire, le système d'équations linéaire étant basé sur une description paramétrée non cyclique de la pluralité de tâches partielles de la tâche, une description paramétrée de l'architecture de processeur prédéterminée et une pluralité de conditions supplémentaires; et

déterminer (120) une attribution de chaque tâche partielle de la pluralité de tâches partielles à une unité de calcul de l'architecture de processeur prédéterminée sur base du système d'équations linéaire, de sorte que soient remplies toutes les conditions supplémentaires,

**caractérisé par le fait que** la description paramétrée de la pluralité de tâches partielles définit une pluralité de connexions de données entre les tâches partielles et que la description paramétrée de l'architecture de processeur prédéterminée définit une pluralité de liaisons de données entre les unités de calcul, le système d'équations linéaire étant par ailleurs basé sur une description de coût paramétrée, la description de coût paramétrée indiquant pour chaque tâche partielle et pour chaque connexion de données entre tâches partielles le nombre d'intervalles de temps que nécessite chaque unité de calcul pour le traitement de chaque tâche partielle et le nombre d'intervalles de temps que nécessite chaque liaison de données entre les unités de calcul pour la réalisation de chaque connexion de données.

**2.** Procédé selon la revendication 1, dans lequel la détermination (120) de l'attribution de chaque tâche partielle a lieu en résolvant le système d'équations linéaire sur base d'un algorithme d'optimisation linéaire pour nombres entiers.

**3.** Procédé selon la revendication 1 ou 2, dans lequel la préparation (110) du système d'équations linéaire comporte une détermination (210) du système d'équations linéaire sur base de la description paramétrée de la pluralité de tâches partielles de la tâche, de la description paramétrée de l'architecture de processeur prédéterminée et de la pluralité de conditions supplémentaires.

**4.** Procédé selon l'une des revendications 1 à 3, dans lequel le système d'équations linéaire présente comme coefficients exclusivement des valeurs entières.

**5.** Procédé selon l'une des revendications 1 à 4, dans lequel le système d'équations linéaire présente pour chaque condition supplémentaire au moins une équation.

**6.** Procédé selon l'une des revendications 1 à 5, dans lequel la détermination (120) de l'attribution de chaque tâche partielle aux unités de calcul a lieu de manière résolue dans le temps sur des intervalles de temps prédéfinis d'un laps de temps considéré.

**7.** Procédé selon l'une des revendications 1 à 6, dans lequel le système d'équations linéaire est représenté par une matrice de coefficients, un vecteur de résultats, et un vecteur de conditions supplémentaires.

**8.** Procédé selon la revendication 7, dans lequel chaque colonne de la matrice de coefficients est associée à une variable du vecteur de résultats et chaque rangée de la matrice de coefficients représente, ensemble avec un paramètre y associé du vecteur de conditions supplémentaires, au moins une partie d'une condition supplémentaire de la pluralité de conditions supplémentaires.

**9.** Procédé selon la revendication 7 ou 8, dans lequel le vecteur de résultats présente une variable pour chaque combinaison de tâche partielle de la pluralité de tâches partielles et d'unité de calcul de la pluralité d'unités de calcul, lors de la détermination (120) de l'attribution étant calculée, pour chacune de ces variables, une valeur qui indique si une tâche partielle est associée à une unité de calcul.

**10.** Procédé selon l'une des revendications 7 à 9, dans lequel la description paramétrée de la pluralité de tâches partielles définit une pluralité de connexions de données entre les tâches partielles et la description paramétrée de l'architecture de processeur prédéterminée définit une pluralité de liaisons de données entre les unités de calcul, le vecteur de résultats présentant une variable pour chaque combinaison de connexion de données entre les tâches partielles et de liaison de données entre les unités de calcul, lors de la détermination (120) de l'attribution étant calculée, pour chacune de ces variables, une valeur qui indique si une connexion de données est associée à une liaison de données.

**11.** Procédé selon les revendications 7 à 10, dans lequel la description paramétrée de la pluralité de tâches partielles définit une pluralité de connexions de données entre les tâches partielles et la description paramétrée de l'architecture de processeur prédéterminée définit une pluralité de liaisons de données entre les unités de calcul, le vecteur de résultats présentant une variable pour chaque combinaison de tâche partielle, d'unité de calcul et d'intervalle de temps d'un laps de temps considéré et une variable pour chaque combinaison de connexion de données entre les tâches partielles, de liaison de données entre les unités de calcul et de l'intervalle de temps du laps de temps considéré, lors de la détermination (120) de l'attribution étant calculée, pour chacune de ces variables, une valeur indiquant si une tâche partielle est associée à une unité de calcul dans un intervalle de temps ou si une connexion de données est associée à une liaison de données dans un intervalle de temps.

**12.** Procédé selon l'une des revendications 1 à 11, dans lequel la détermination (120) de l'attribution de chaque tâche partielle à une unité de calcul a lieu en tenant compte d'un traitement répété de la tâche par l'architecture de processeur prédéterminée, une tâche partielle, à traiter en dernier lieu dans le temps de la tâche d'un premier traitement de la tâche, étant traitée de manière finale plus tard qu'un début d'une tâche partielle à traiter en premier lieu dans le temps de la tâche d'un deuxième traitement ultérieur de la tâche.

**13.** Procédé selon l'une des revendications 1 à 12, présentant une détermination (230) d'une attribution optimisée de chaque tâche partielle de la pluralité de tâches partielles à une unité de calcul de l'architecture de processeur prédéterminée sur base d'une condition d'optimisation.

**14.** Procédé selon la revendication 13, dans lequel la condition d'optimisation est la détermination d'une attribution présentant une consommation d'énergie minimale de l'architecture de processeur, une mémoire minimale requise ou une période de latence minimale.

**15.** Procédé selon l'une des revendications 1 à 14, dans lequel la description paramétrée de la pluralité de tâches partielles de la tâche est basée sur un graphique de flux de données.

**16.** Procédé selon l'une des revendications 1 à 15, dans lequel la description paramétrée de l'architecture de processeur prédéterminée est basée sur une graphique de structure.

**17.** Procédé selon l'une des revendications 1 à 16, comprenant par ailleurs la préparation d'un ensemble de données qui peut être traité par un contrôleur ou une unité de commande, l'ensemble de données contenant des informations sur l'attribution déterminée.

**18.** Dispositif (1300) pour attribuer une pluralité de tâches partielles d'une tâche à une pluralité d'unités de calcul d'une architecture de processeur prédéterminée, comprenant la caractéristique suivante:

un processeur de problème d'optimisation linéaire (1320) qui est conçu pour déterminer une attribution de chaque tâche partielle de la pluralité de tâches partielles à une unité de calcul de l'architecture de processeur prédéterminée sur base d'un système d'équations linéaire, le système d'équations linéaire étant basé sur une description paramétrée non cyclique de la pluralité de tâches partielles de la tâche, une description paramétrée de l'architecture du processeur prédéterminée et une pluralité de conditions supplémentaires, et l'attribution de chaque tâche partielle étant déterminée de sorte que soient remplies toutes les conditions supplémentaires, **caractérisé par le fait que** la description paramétrée de la pluralité de tâches partielles définit une pluralité de connexions de données entre les tâches partielles et que la description paramétrée de l'architecture de processeur prédéterminée définit une pluralité de liaisons de données entre les unités de calcul, le système d'équations linéaire étant par ailleurs basé sur une description de coût paramétrée, la description de coût paramétrée indiquant pour chaque tâche partielle et pour chaque connexion de données entre tâches partielles le nombre d'intervalles de temps que nécessite chaque unité de calcul pour le traitement de chaque tâche partielle et le nombre d'intervalles de temps que nécessite chaque liaison de données entre les unités de calcul pour la réalisation de chaque connexion de données.

**19.** Dispositif selon la revendication 18, présentant un générateur de système d'équations (1320) qui est conçu pour générer le système d'équations linéaire sur base de la description paramétrée de la pluralité de tâches partielles de la tâche, de la description paramétrée de l'architecture de processeur prédéterminée et de la pluralité de conditions supplémentaires.

**20.** Programme d'ordinateur avec un code de programme pour réaliser un procédé selon l'une des revendications 1 à 17 lorsque le programme d'ordinateur est exécuté sur un ordinateur ou un microcontrôleur.

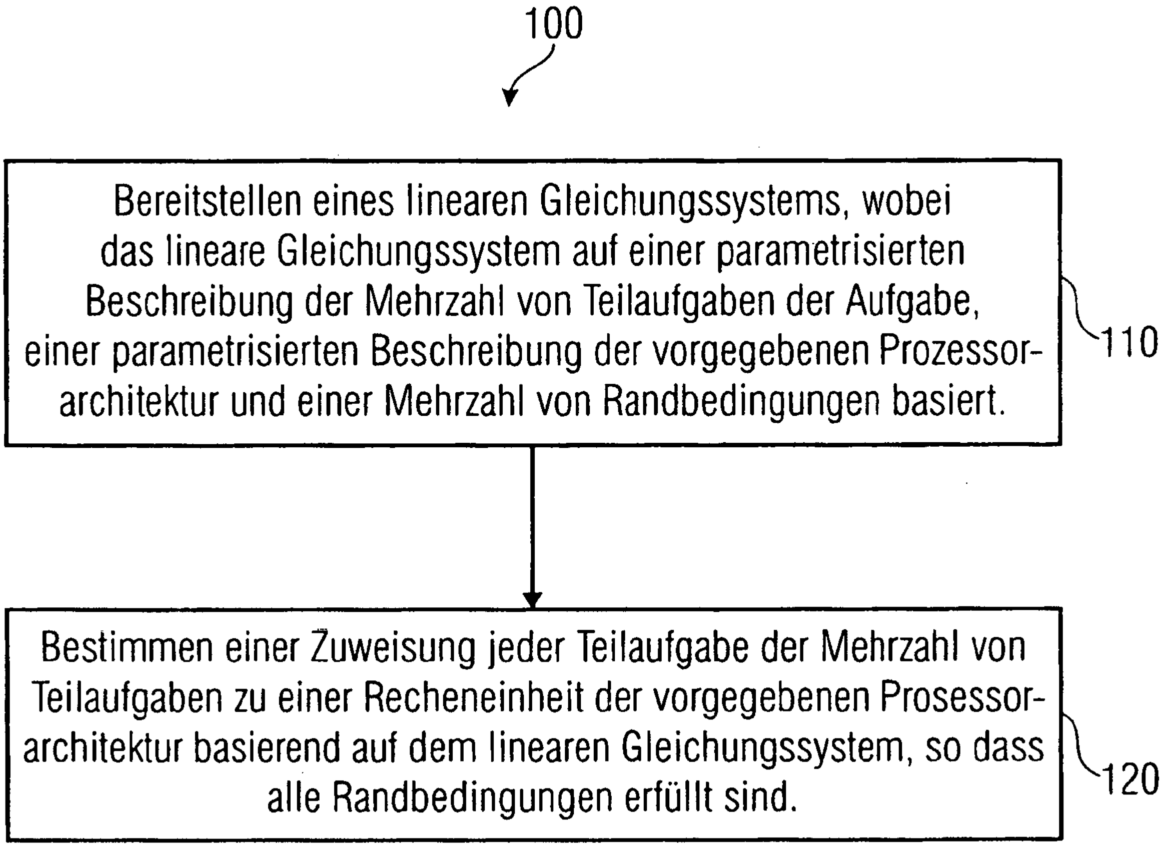
100
Bereitstellen eines linearen Gleichungssystems, wobei das lineare Gleichungssystem auf einer parametrisierten Beschreibung der Mehrzahl von Teilaufgaben der Aufgabe, einer parametrisierten Beschreibung der vorgegebenen Prozessorarchitektur und einer Mehrzahl von Randbedingungen basiert.
110
Bestimmen einer Zuweisung jeder Teilaufgabe der Mehrzahl von Teilaufgaben zu einer Recheneinheit der vorgegebenen Prosessorarchitektur basierend auf dem linearen Gleichungssystem, so dass alle Randbedingungen erfüllt sind.
120

FIG 1

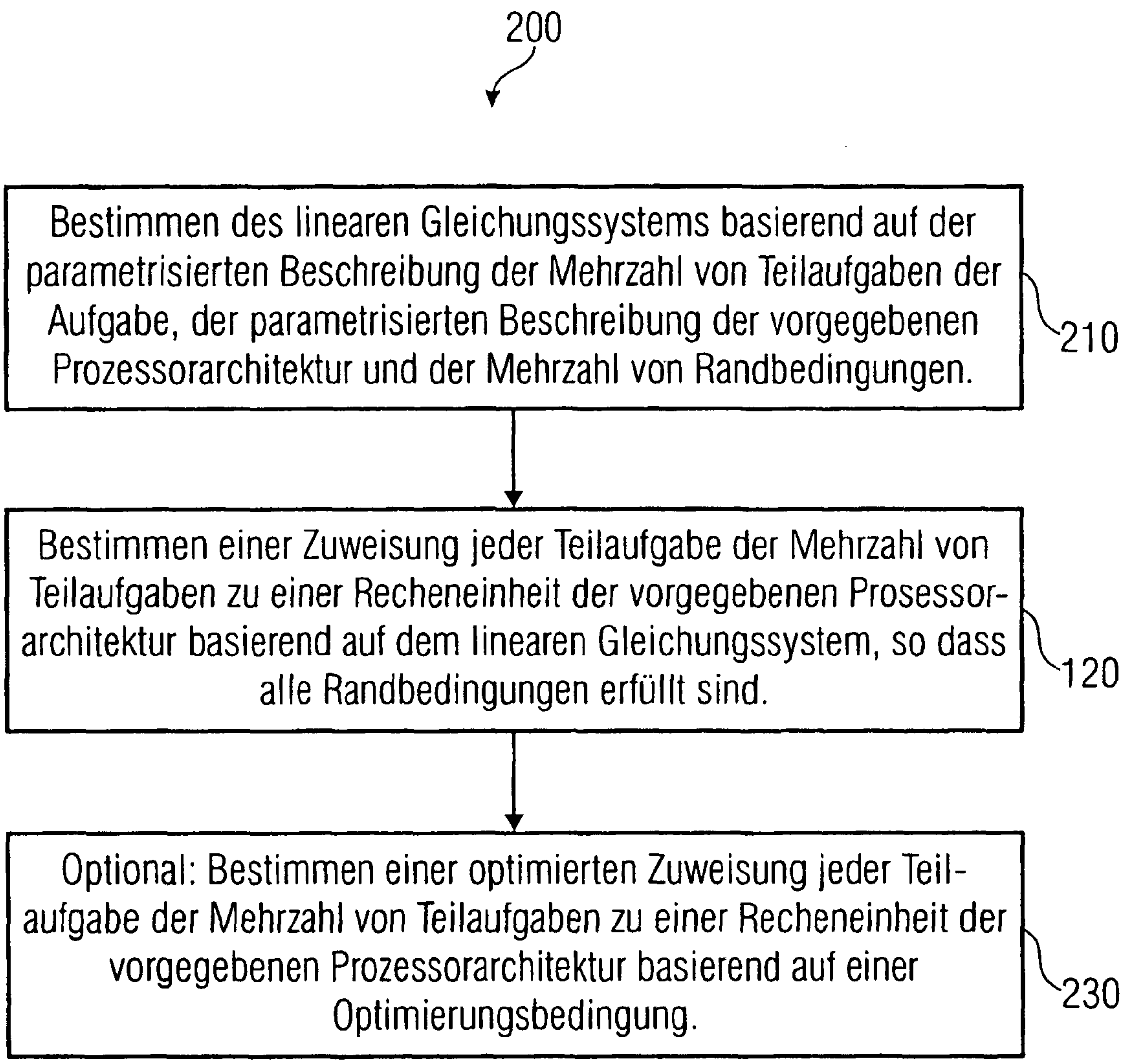
200
Bestimmen des linearen Gleichungssystems basierend auf der parametrisierten Beschreibung der Mehrzahl von Teilaufgaben der Aufgabe, der parametrisierten Beschreibung der vorgegebenen Prozessorarchitektur und der Mehrzahl von Randbedingungen.
210
Bestimmen einer Zuweisung jeder Teilaufgabe der Mehrzahl von Teilaufgaben zu einer Recheneinheit der vorgegebenen Prosessorarchitektur basierend auf dem linearen Gleichungssystem, so dass alle Randbedingungen erfüllt sind.
120
Optional: Bestimmen einer optimierten Zuweisung jeder Teilaufgabe der Mehrzahl von Teilaufgaben zu einer Recheneinheit der vorgegebenen Prozessorarchitektur basierend auf einer Optimierungsbedingung.
230

FIG 2

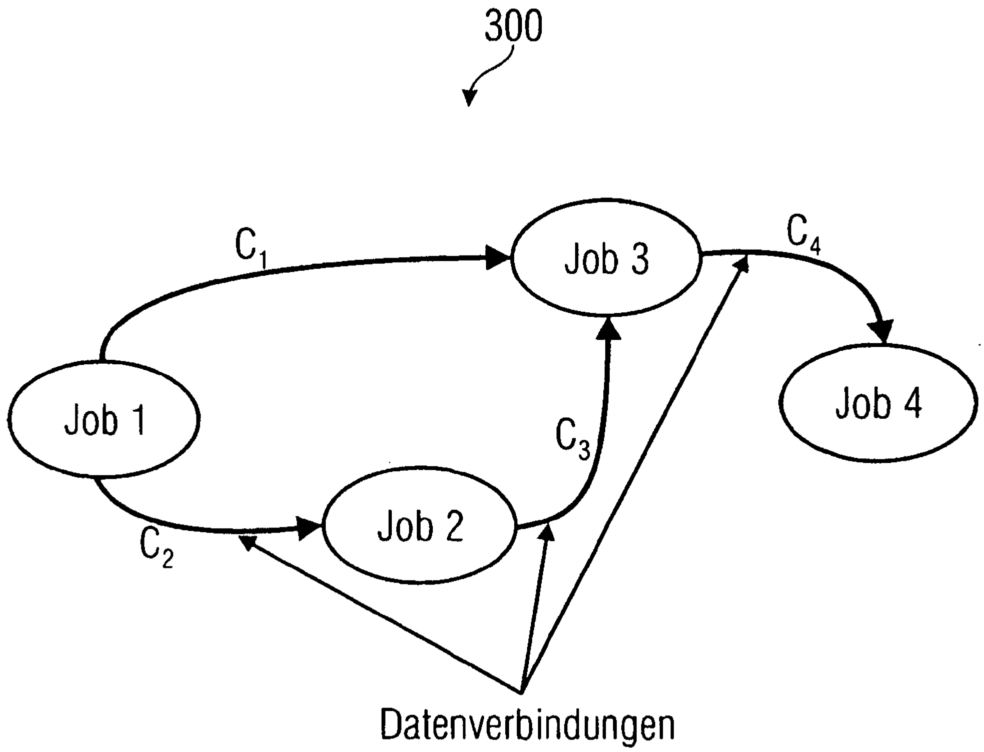


FIG 3

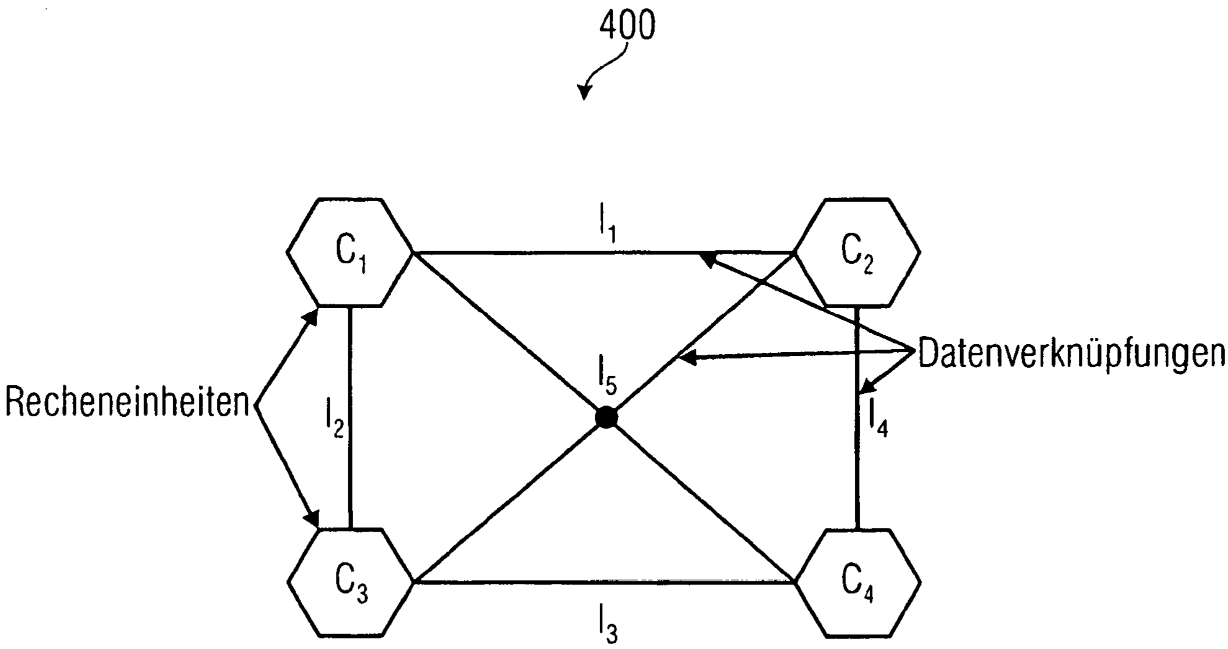
400
$l_1$
$C_1$
$C_2$
Datenverknüpfungen
$l_5$
Recheneinheiten
$l_2$
$l_4$
$C_3$
$C_4$
$l_3$

FIG 4

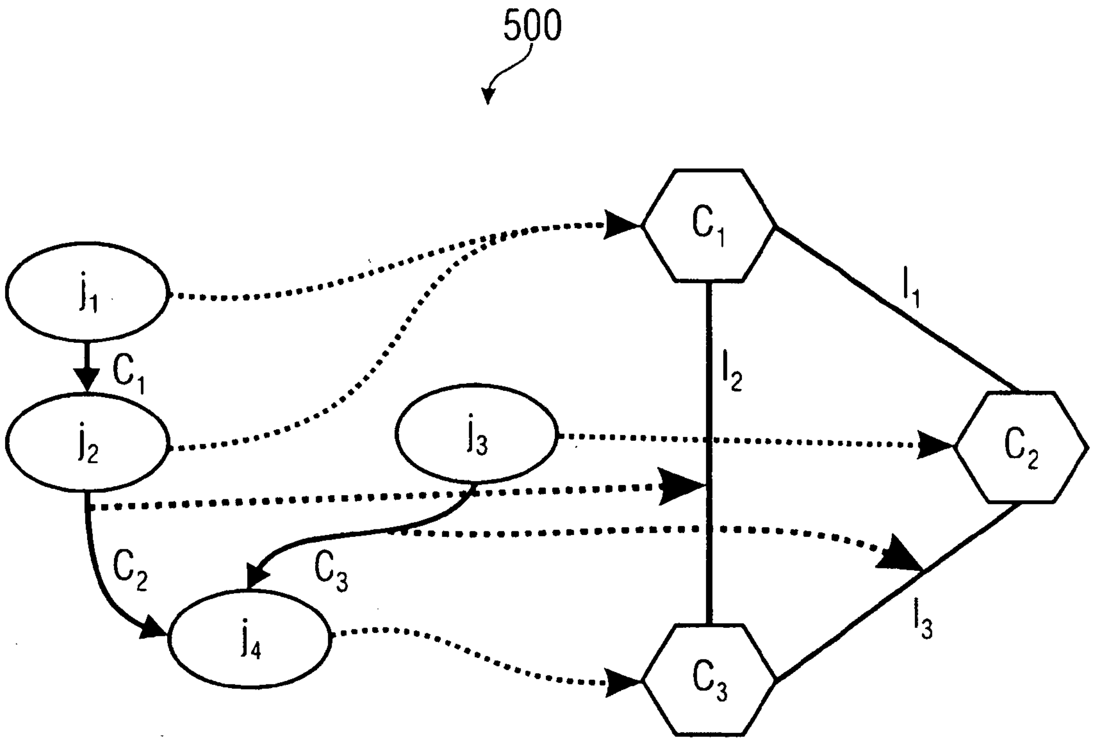


FIG 5

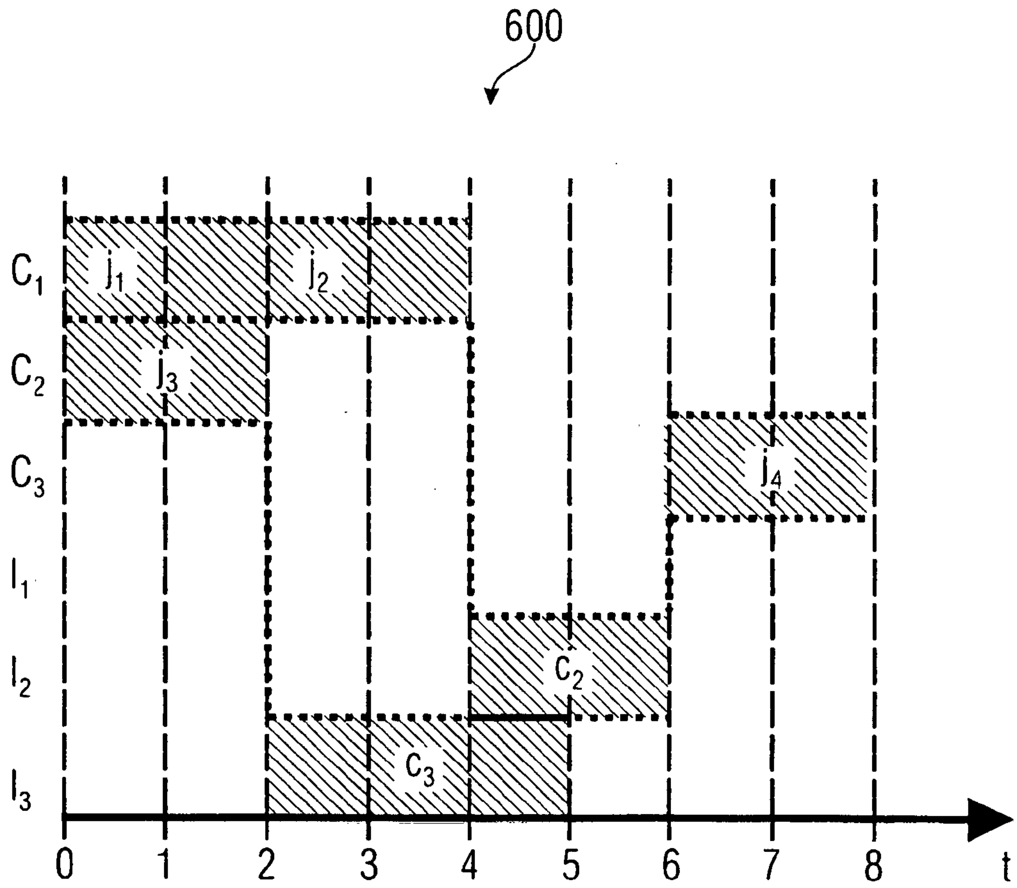


FIG 6

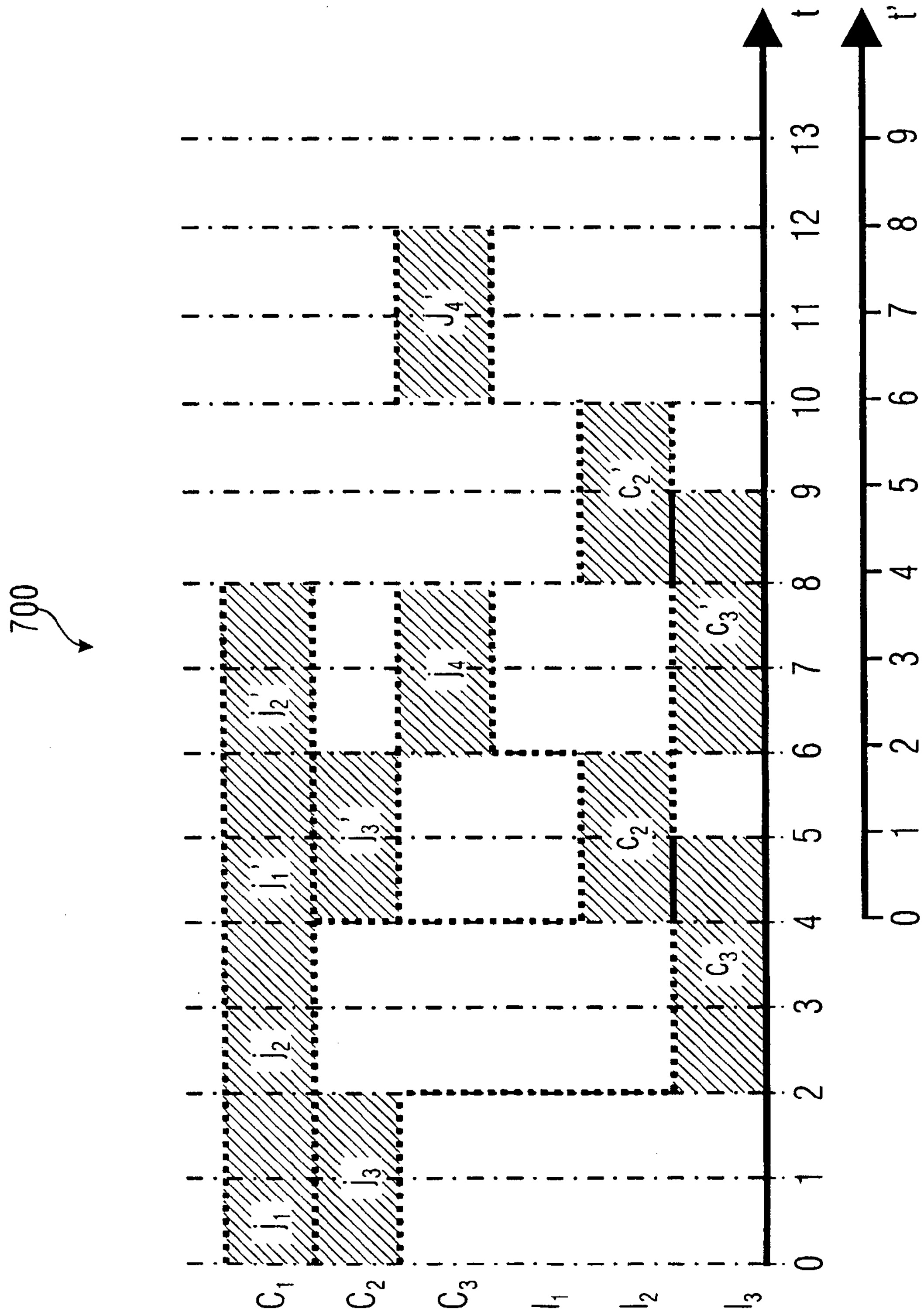
700
C1
C2
C3
I1
I2
I3
J1
J3
J2
C3
J1'
J3'
C2
J2'
J4
C3'
C2'
J4'
0
1
2
3
4
5
6
7
8
9
10
11
12
13
t
t'

FIG 7

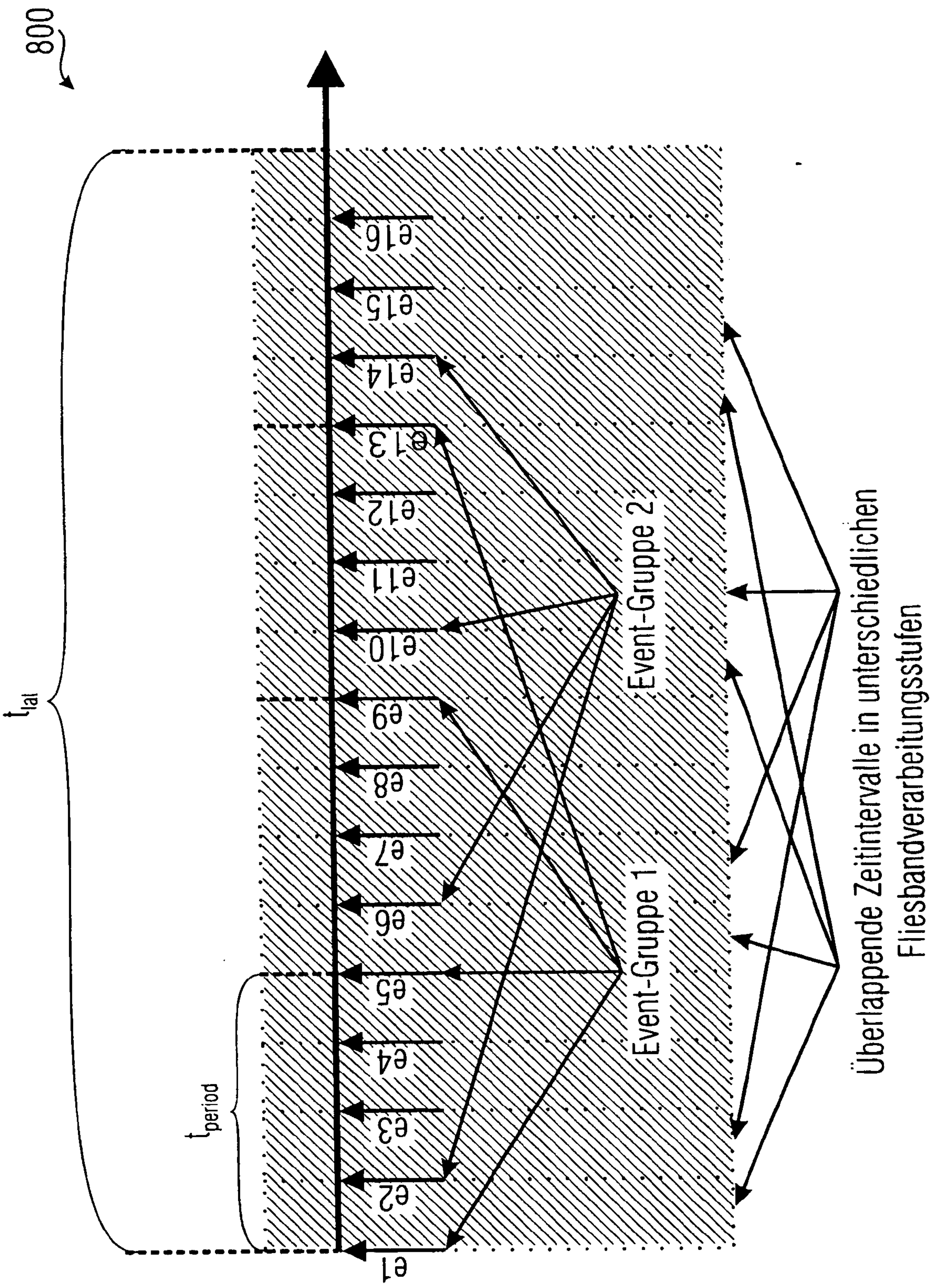
800
$t_{lat}$
$t_{period}$
e1
e2
e3
e4
e5
e6
e7
e8
e9
e10
e11
e12
e13
e14
e15
e16
Event-Gruppe 1
Event-Gruppe 2
Überlappende Zeitintervalle in unterschiedlichen
Fliesbandverarbeitungsstufen

FIG 8

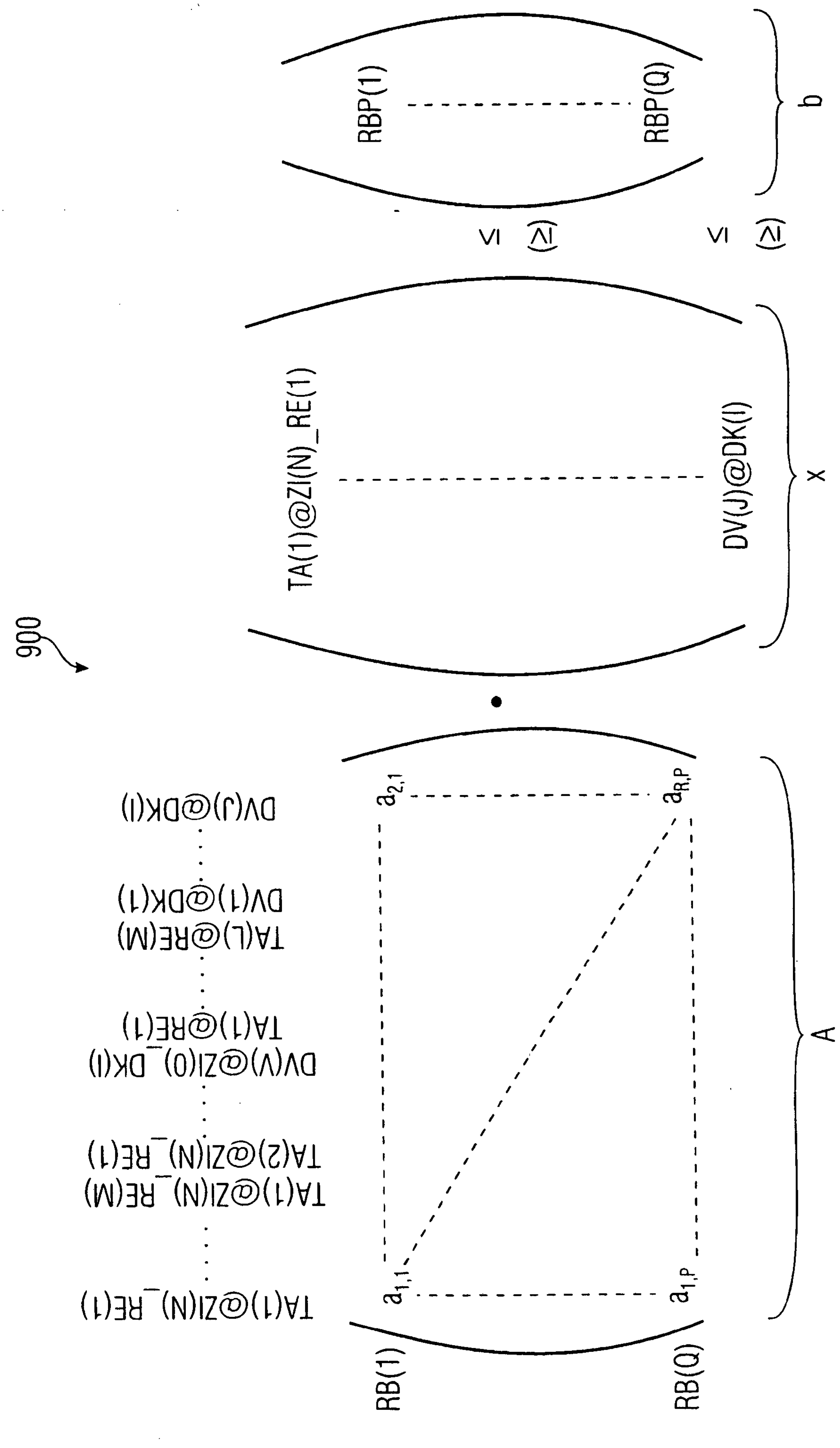
900
RB(1)
RB(Q)
TA(1)@ZI(N)_RE(1)
TA(1)@ZI(N)_RE(M)
TA(2)@ZI(N)_RE(1)
DV(V)@ZI(0)_DK(I)
TA(1)@RE(1)
TA(L)@RE(M)
DV(1)@DK(1)
DV(J)@DK(I)
$a_{1,1}$
$a_{1,P}$
$a_{2,1}$
$a_{R,P}$
A
TA(1)@ZI(N)_RE(1)
DV(J)@DK(I)
x
≤ (≥)
≤ (≥)
RBP(1)
RBP(Q)
b

FIG 9

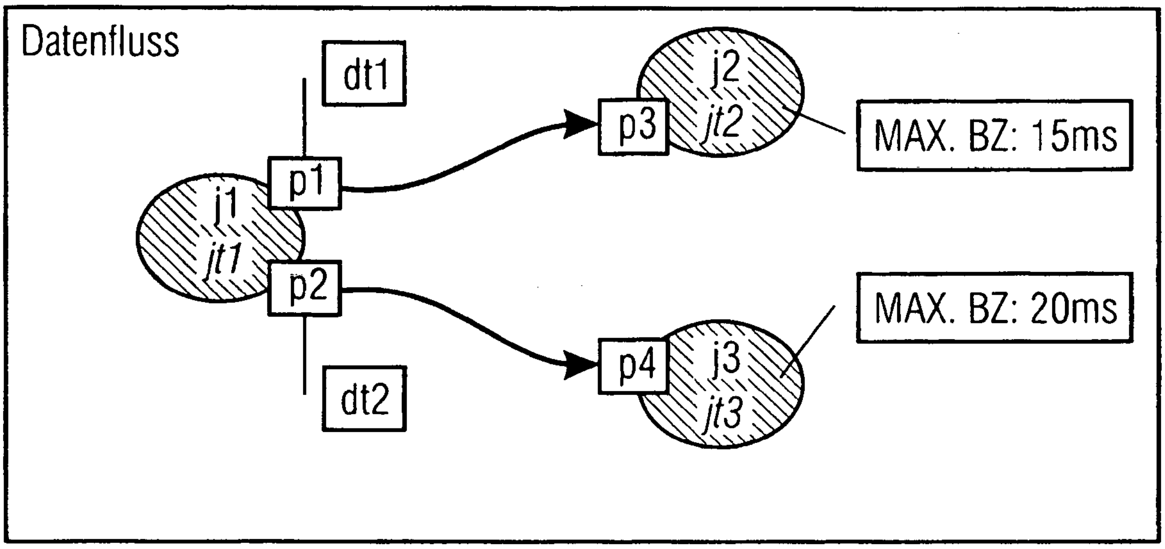


FIG 10A

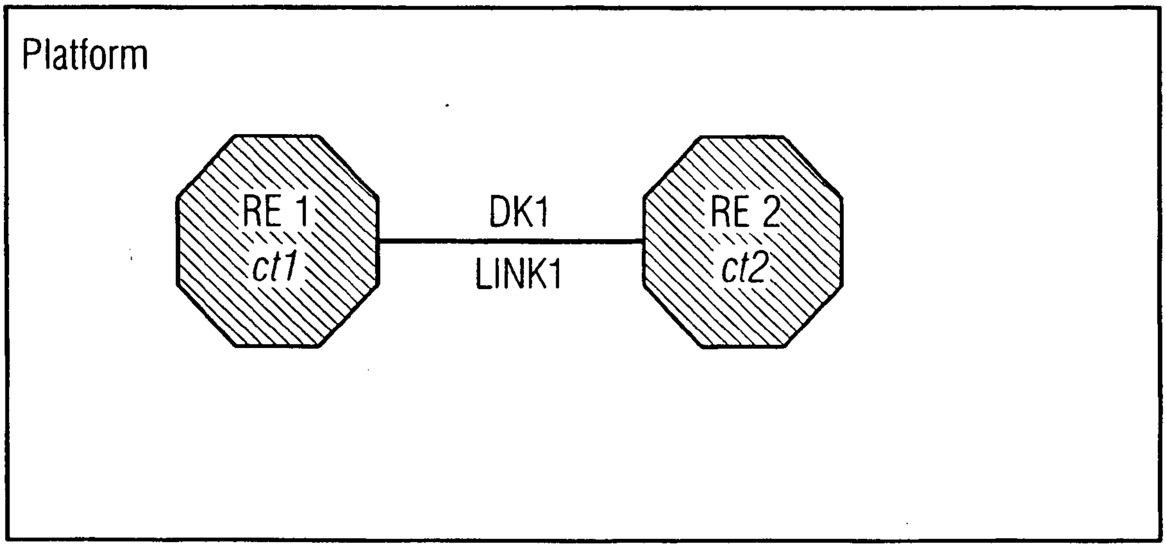


FIG 10B

| Ergebnisvektor | |
|---|---|
| 0 | s_event_job1@core1[19] |
| 0 | s_event_job1@core2[19] |
| 0 | s_event_job1@core1[18] |
| ⋮ | ⋮ |
| 0 | s_event_job3@core2[1] |
| 0 | s_event_job3@core1[0] |
| 0 | s_event_job3@core2[0] |
| 0 | s_event_job1→job2@link1[19] |
| 0 | s_event_job1→job2@link1[18] |
| 0 | s_event_job1→job2@link1[17] |
| 0 | s_event_job1→job2@link1[16] |
| ⋮ | ⋮ |
| 0 | s_event_job1→job3@link1[1] |
| 0 | s_event_job1→job3@link1[0] |
| 0 | s_core_job1@core1 |
| 1 | s_core_job1@core2 |
| 1 | s_core_job2@core1 |
| 0 | s_core_job2@core2 |
| 0 | s_core_job3@core1 |
| 1 | s_core_job3@core2 |
| 1 | s_link_job1→job2@link1 |
| 0 | s_link_job1→job3@link1 |
| 0 | tstartjob(job1) |
| 7 | tstopjob(job1) |
| 9 | tstartjob(job2) |
| 15 | tstopjob(job2) |
| 7 | tstartjob(job3) |
| 13 | tstopjob(job3) |

event entspricht Zeitintervall
core entspricht Recheneinheit
job→job enspricht Datenverbindung
link enspricht Datenverknüpfung

FIG 10C

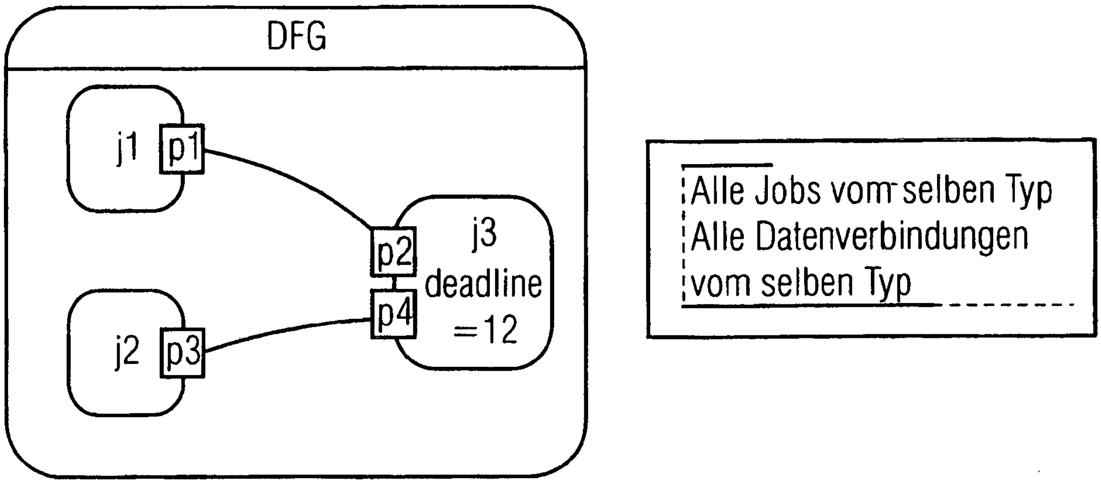


FIG 11A

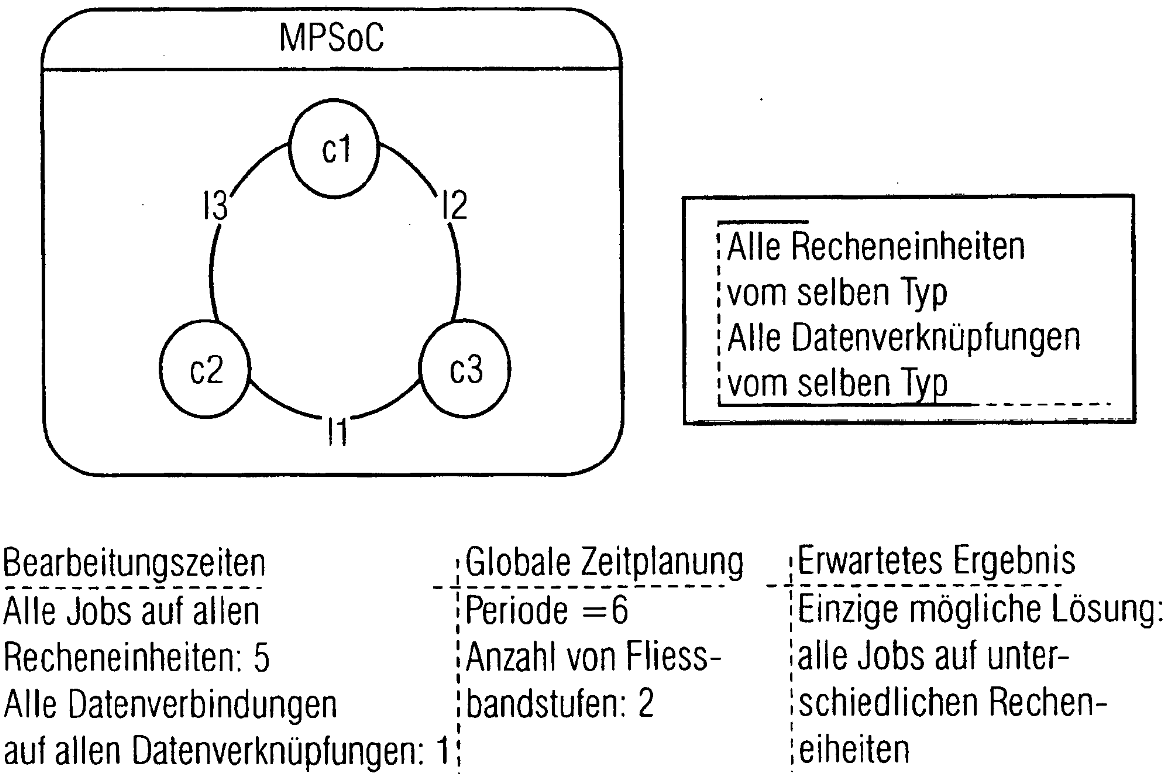


FIG 11B

Ergebnisvektor

| Ergebnisvektor | |
|---|---|
| 0 | s_event_j1@c1[11] |
| 0 | s_event_j1@c2[11] |
| 0 | s_event_j1@c3[11] |
| 0 | s_event_j1@c1[10] |
| 0 | s_event_j1@c2[10] |
| 0 | s_event_j1@c3[10] |
| 0 | s_event_j1@c1[9] |
| ⋮ | ⋮ |
| 0 | s_event_j3@c2[0] |
| 0 | s_event_j3@c3[0] |
| 0 | s_event_j1→j3@l3[11] |
| 0 | s_event_j1→j3@l2[11] |
| ⋮ | ⋮ |
| 0 | s_event_j2→j3@l1[1] |
| 0 | s_event_j2→j3@l3[0] |
| 0 | s_event_j2→j3@l2[0] |
| 0 | s_event_j2→j3@l1[0] |
| 0 | s_core_j1@c1 |
| 0 | s_core_j1@c2 |
| 1 | s_core_j1@c3 |
| 0 | s_core_j2@c1 |
| 1 | s_core_j2@c2 |

FIG11C

| FIG 11C | FIG 11C-A |
|---|---|
| | FIG 11C-B |

| | |
|---|---|
| 0 | s_core_j2@c3 |
| 1 | s_core_j3@c1 |
| 0 | s_core_j3@c2 |
| 0 | s_core_j3@c3 |
| 0 | s_link_j1→j3 @l3 |
| 1 | s_link_j1→j3 @l2 |
| 0 | s_link_j1→j3 @l1 |
| 1 | s_link_j2→j3 @l3 |
| 0 | s_link_j2→j3 @l2 |
| 0 | s_link_j2→j3 @l1 |
| 0 | tstartjob(j1) |
| 5 | tstopjob(j1) |
| 0 | tstartjob(j2) |
| 5 | tstopjob(j2) |
| 6 | tstartjob(j3) |
| 11 | tstopjob(j3) |

event entspricht Zeitintervall
core entspricht Recheneinheit
job→job enspricht Datenverbindung
link enspricht Datenverknüpfung

FIG11C

| FIG 11C | FIG 11C-A |
|---|---|
| | FIG 11C-B |

1200

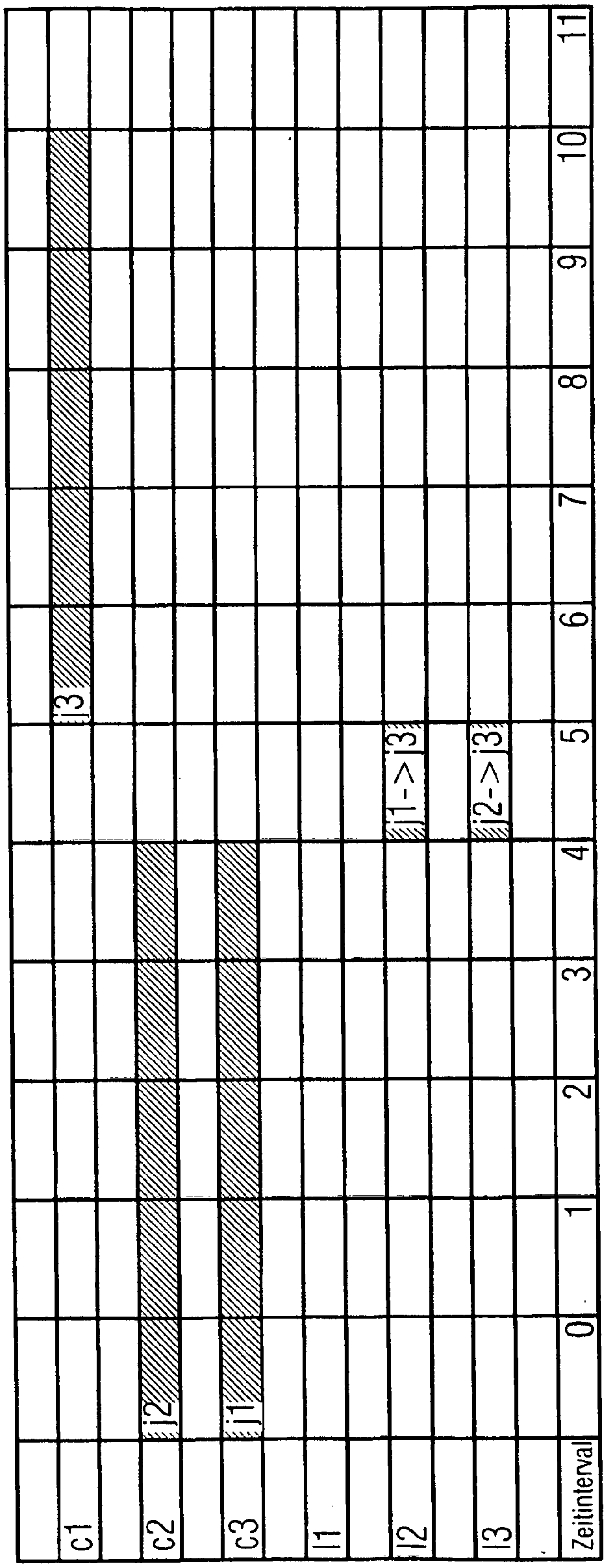
c1
c2
c3
l1
l2
l3
Zeitinterval
0
1
2
3
4
5
6
7
8
9
10
11
j2
j1
j3
j1->j3
j2->j3

FIG 12

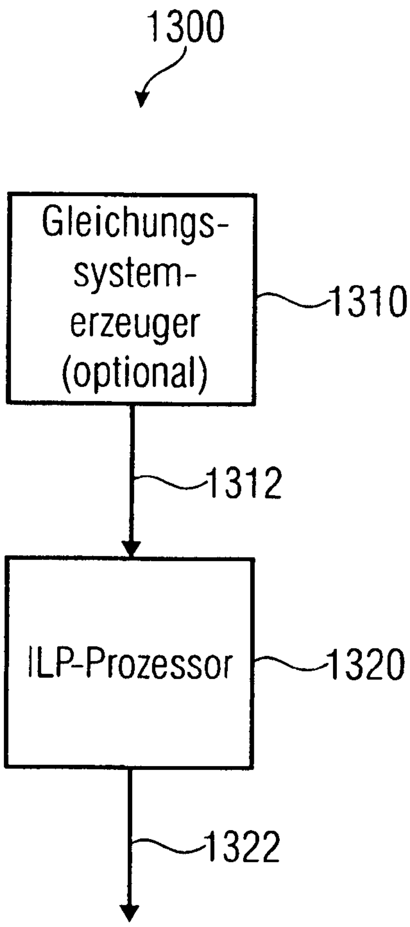
1300
Gleichungs-
system-
erzeuger
(optional)
1310
1312
ILP-Prozessor
1320
1322

FIG 13

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- **DAVID R. MARTINEZ ; ROBERT A. BOND ; M. MICHAEL VAI ; BILGE E. S. AKGUL.** High Performance Embedded Computing Handbook. CRC Press, 2008, 509-515
- **MICHAEL I. GORDON ; WILLIAM THIES ; SAMAN AMARASINGHE.** Exploiting Coarse-Grained Task, Data, and Pipeline Parallelism in Stream Programs. *ASPLOS' 06,* 2006, 151-162
- **RUGGIERO, MARTINO ; GUERRI, ALESSIO ; BERTOZZI, DAVIDE ; MILANO, MICHAELA ; BENINI, LUCA.** A Fast and Accurate Technique for Mapping Parallel Applications on Stream-Oriented MPSoC Platforms with Communication Awareness. *International Journal of Parallel Programming,* Februar 2008, vol. 36 (1
- **BENINI, LUCA ; LOMBARDI, MICHELE ; MANTOVANI, MARCO ; MILANO, MICHAELA ; RUGGIERO, MARTINO.** Multi-stage Benders Decomposition for Optimizing Multicore Architectures. *CPAIOR 2008,* 2008, 36-50
- **MICHAEL I. GORDON ; WILLIAM THIES ; SAMAN AMARASINGHE.** Exploiting Coarse-Grained Task, Data, and Pipeline Parallelism in Stream Programs. *ASPLOS,* 2006, vol. 06, 151-162
- **ROBATMILI, B. ; COONS, K. E. ; BURGER, D. ; MCKINLEY, K. S.** *Strategies for Mapping Dataflow Blocks to Distributed Hardware,* 2008
- **CHATHA, KARAM.** Hardware-Software Partitioning and Pipelined Scheduling of Transformative Applications. *IEEE Transactions on very large scale integration (VLSI) Systems,* Juni 2002, vol. 10 (3
- **BRANDENBURG, B. B. ; CALANDRINO, L. M. ; ANDERSON, J. H.** On the Scalability of Real-Time Scheduling Algorithms on Multicore Platforms: A Cas Study. *Real-Time Systems Symposium,* 2008, vol. 00, 157-169
- **LIU, Y. ; ZHANG, X. ; LI, H. ; QIAN, D.** Allocating Tasks in Multi-core Processor based Parallel System IFIP. *International Conference on Network and Parallel Computing Workshops,* 2007, 748-753
- **SINGLER, JOHANNES ; KOSNIK, BAENJAMIN.** The GNU libstd++parallel mode: Software Engineering Considerations''), (''Open MP.org, http://openmp.org/wp/, last checked 28.05.2009'', ''Kwok, Yu-Kwong; Ahmad, Ishfaq: Static Scheduling Algorithms for Allocating Directed Task Graphs to Multiprocessors. *ACM Computing Surveys,* Dezember 1999, vol. 31 (4
- **MORRIS, ROBERT ; NOWROUZIAN, BEHROUZ.** A Novel Technique for Pipelined Scheduling and Allocation of Data-Flow Graphs based on Genetic Algorithms. *CCECE,* 1996, 429-432
- **LORI E. LUCKE ; KESHAB K. PARHI.** Generalized ILP Scheduling and Allocation for High-Level DSP Synthesis. *Custom Integrated Circuit Conference, 1993, Proceedings of the IEEE,* 09. Mai 1993